(19) Europäisches Patentamt
European Patent Office
Office européen des brevets

(11) EP 0 252 278 B1

(12) # EUROPÄISCHE PATENTSCHRIFT

(45) Veröffentlichungstag und Bekanntmachung des Hinweises auf die Patenterteilung:
**19.08.1998 Patentblatt 1998/34**

(51) Int. Cl.$^6$: **A01N 59/00**

(21) Anmeldenummer: **87107881.2**

(22) Anmeldetag: **01.06.1987**

(54) **Desinfektionsmittel und ihre Verwendung zur Haut- und Schleimhautdesinfektion**
Disinfecting agents and their use in disinfecting the skin and mucous membranes
Agents désinfectants et leur utilisation pour la désinfection de la peau et des membranes muqueuses

(84) Benannte Vertragsstaaten:
**AT BE CH DE ES FR GB IT LI NL SE**

(30) Priorität: **09.06.1986 DE 3619376**
**02.02.1987 DE 3702983**

(43) Veröffentlichungstag der Anmeldung:
**13.01.1988 Patentblatt 1988/02**

(73) Patentinhaber:
**Henkel Kommanditgesellschaft auf Aktien**
**40191 Düsseldorf (DE)**

(72) Erfinder:
- **Bansemir, Klaus, Dr.**
  **D-4018 Langenfeld (DE)**
- **Disch, Karlheinz, Dr.**
  **D-5657 Haan (DE)**
- **Hachmann, Klaus, Dr.**
  **D-4010 Hilden (DE)**
- **Lehmann, Rudolf, Dr.**
  **D-5653 Leichlingen (DE)**
- **Biermann, Manfred, Dr.**
  **D-4330 Mülheim (DE)**
- **Schnegelberger, Harald, Dr.**
  **D-5653 Leichlingen (DE)**

(56) Entgegenhaltungen:
**EP-A- 0 016 319** **GB-A- 1 126 953**
**US-A- 2 917 428**

EP 0 252 278 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft verbesserte Desinfektionsmittel, die auf einer Rahmenrezeptur von Alkoholen und Wasserstoffperoxid aufgebaut sind, sowie die Verwendung derartiger Desinfektionsmittel zur Haut- und Schleimhautdesinfektion.

Auf der Basis von Wasser formulierte, Alkohole neben Wasserstoffperoxid enthaltende Hautdesinfektionsmittel sind aus dem Stand der Technik bekannt. Sie kombinieren die an sich bekannte, antimikrobielle Wirkung der Alkohole mit der oxidierenden Wirkung des Wasserstoffperoxids und haben den Vorteil, daß sie frei von Jod oder resorbierbaren Jodverbindungen sind, die für die Anwendung in manchen Bereichen der Desinfektion unerwünscht sind. Derartige Desinfektionsmittel wurden beispielsweise in der DE-OS 29 04 217 beschrieben. Die dort genannten Mittel werden in erster Linie für die Händedesinfektion im medizinischen Bereich, insbesondere vor dem Tragen von Operationshandschuhen, eingesetzt und sind insbesondere deswegen vorteilhaft, weil sie frei von Keimsporen sind und eingedrungene Keimsporen abzutöten vermögen. Die genannten Mittel weisen jedoch einen Alkoholgehalt von mindestens 50 Gew.-% auf. Derartig hohe Alkoholgehalte sind jedoch in Desinfektionsmitteln für die Verwendung zur Schleimhautdesinfektion unerwünscht, da sie auf die Schleimhäute eine ausgesprochen starke Reizwirkung ausüben. Ein weiterer Nachteil ist darin zu sehen, daß nach relativ kurzer Zeit der Alkoholanteil der dort genannten Desinfektionsmittel aufgrund des relativ hohen Dampfdrucks des Alkohols "verflogen" ist und damit die desinfizierende Wirkung nachläßt bzw. nicht mehr gegeben ist.

Es hat sich gezeigt, daß auch Mittel auf Basis von Alkoholen, beispielsweise Ethanol, n-Propanol und/oder i-Propanol, und Wasserstoffperoxid, jedoch mit Alkoholkonzentrationen deutlich unter 50 Gew.-%, im Prinzip auch zur Desinfektion der Haut und auch zur Schleimhautdesinfektion eingesetzt werden können. Die durch die Applikation des Desinfektionsmittels angestrebte Reduktion der Keime wird jedoch erst nach Einwirkzeiten von mindestens 2 bis 3 min erzielt. Derart lange Einwirkzeiten müssen jedoch als unrealistisch angesehen werden; zumindest werden sie in der Praxis so gut wie nie verwirklicht. Somit wird mit weniger Alkohol enthaltenden Desinfektionsmitteln der angestrebte Desinfektionserfolg nicht erreicht.

Desinfektionsmaßnahmen an empfindlichen Hautstellen bzw. an Schleimhäuten, wie sie beispielsweise vor medizinischen Eingriffen erforderlich sind, bereiten nach wie vor große Probleme. Dies liegt zum einen daran, daß diese Hautstellen ausgesprochen empfindlich gegenüber chemischen Reizen sind und auf die Behandlung mit den bekannten, gut und rasch wirksamen Substanzgruppen (Alkoholen, Aldehyden, Chlorabspaltern) mit Unwohlsein bis hin zur Schmerzgrenze reagieren.

Andererseits verbietet sich eine Behandlung mit derartigen Verbindungen unter Umständen auch deswegen, weil diese das behandelte Gewebe unter Umständen schädigen oder allergisieren können oder toxische Nebenwirkungen durch die Resorption der Wirkstoffe nicht ausgeschlossen sind. So wird beispielsweise an Schleimhäuten Jod besonders gut resorbiert; eine desinfizierende Behandlung von Schleimhäuten mit Jod enthaltenden Desinfektionsmitteln oder Antiseptika belastet aber den Organismus aufgrund der hohen Resorptionsfähigkeit besonders stark.

Der vorliegenden Erfindung lag die Aufgabe zugrunde, ein verbessertes, wasserhaltiges Desinfektionsmittel auf Basis von Alkoholen und Wasserstoffperoxid zu schaffen, das eine Gesamt-Alkoholmenge von weniger als 50 Gew.-% enthält. Andererseits sollte jedoch gewährleistet sein, daß bei den für die Haut- und Schleimhautdesinfektion zu erwartenden kurzen Einwirkungszeiten eine Desinfektion der behandelten Hautstellen erreicht werden kann, die Keimbesiedlung beispielsweise der Schleimhäute soweit reduziert werden kann, daß das Risiko einer Infektion bei medizinischen Eingriffen minimiert wird. Zudem sollten antimikrobiell wirksame Substanzen verwendet werden, die nicht nur ausgesprochen "Organismus-verträglich" sind und damit Unwohlsein oder Schmerzen nicht hervorrufen, sondern sich auch hinsichtlich ihrer antimikrobiellen Wirkunfsweise gegenseitig nicht nachteilig beeinflussen, möglichst sogar ergänzen.

Überraschend wurde nun gefunden, daß die gestellten Aufgaben von wasserhaltigen Desinfektionsmitteln gelöst werden, die auf der Basis von Alkoholen und Wasserstoffperoxid konfektioniert sind und außerdem noch andere, selbst antimikrobiell wirksame Substanzen enthalten, und daß sogar diese erfindungsgemäß aufgefundenen Zusätze in der Lage sind, die keimtötende Wirkung dieser Mittel synergistisch so zu steigern, daß auch bei kurzen Einwirkungszeiten, die man für den praktischen Gebrauch in Betracht ziehen muß, eine hinreichende Keimreduktion gewährleistet ist.

Die Erfindung betrifft flüssige, wasserhaltige Desinfektionsmittel auf Basis Alkohol und Wasserstoffperoxid, die einen oder mehrere Alkohole mit 2 bis 8 C-Atomen, Wasserstoffperoxid oder eine in wäßriger Phase Peroxid bildende Verbindung, eine oder mehrere Carbonsäuren, eine oder mehrere mikrobizid wirksame, stickstoffhaltige organische Verbindungen, eine oder mehrere mikrobizid wirksame phenolische Verbindungen, gegebenenfalls noch weitere, in Desinfektionsmitteln vorhandene Wirkstoffe und/oder Hilfsstoffe und Wasser enthalten.

Die Erfindung betrifft außerdem die Verwendung derartiger Desinfektionsmittel zur Haut- und Schleimhautdesinfektion.

Die erfindungsgemäßen flüssigen, wasserhaltigen Desinfektionsmittel enthalten als einen ihrer mikrobizid wirksamen Bestandteile einen oder mehrere Alkohole mit 2 bis 8 C-Atomen. In einer bevorzugten Ausführungsform der Erfindung sind derartige Alkohole im Desinfektionsmittel in einer Menge von 8 bis 25 Gew.-%, bevorzugt von 10 bis 20 Gew.-%, an aktiver Substanz, bezogen auf das Gesamtgewicht des Desinfektionsmittels, vorhanden.

Die bevorzugt als Alkoholkomponente verwendeten Verbindungen stammen aus der Gruppe Ethanol, n-Propanol und i-Propanol. Erfindungsgemäß ist es möglich, die genannten Alkohole einzeln, als Zweier- oder als Dreierkombination miteinander zu verwenden. In den Kombinationen sind praktisch alle Mengenverhältnisse der einzelnen Alkohole zueinander möglich. Zur Herstellung des Desinfektionsmittels werden die genannten Alkohole als solche oder als deren Mischungen mit Wasser eingesetzt. In einer weiteren Ausführungsform der Erfindung kann als Alkoholkomponente auch Benzylalkohol neben einem oder mehreren der Alkohole aus der Gruppe Ethanol, n-Propanol oder i-Propanol verwendet werden.

Als weitere Wirkstoffkomponente enthalten die Desinfektionsmittel gemäß der Erfindung Wasserstoffperoxid oder eine in wäßriger Phase Peroxid bildende Verbindung. Unter "in wäßriger Phase Peroxid bildende Verbindung" werden solche Komponenten verstanden, die bei ihrer Einarbeitung in das Desinfektionsmittel Peroxid freisetzen. Wasserstoffperoxid selbst wird dem erfindungsgemäßen Desinfektionsmittel zweckmäßigerweise in Form von handelsüblichen, mehr oder weniger konzentrierten wäßrigen Lösungen zugegeben. Erfindungsgemäß liegt die Konzentration von Peroxid bzw. Peroxidbildner im oben definierten Sinne im Bereich von 0,2 bis 0,7, bevorzugt von 0,3 bis 0,6 Gew.-% Aktivsubstanz, bezogen auf das Gesamtgewicht des Desinkfektionsmittels. Neben oder auch statt Wasserstoffperoxid können in einer weiteren Ausführungsform auch Peressigsäure oder vergleichbare Verbindungen eingesetzt werden. Besonders bevorzugt ist es jedoch, Wasserstoffperoxid in wäßriger Lösung in das Desinfektionsmittel gemäß der Erfindung einzuarbeiten.

Als weitere essentielle Wirkstoffkomponente enthalten die Desinfektionsmittel gemäß der Erfindung eine oder mehrere Carbonsäuren. Diese Carbonsäuren sind in Konzentrationen von 0,1 bis 0,5, bevorzugt von 0,2 bis 0,4 Gew.-% Aktivsubstanz, bezogen auf das Gesamtgewicht des Desinkfeitonsmittels, in den Desinfektionsmitteln vorhanden. Als Carbonsäuren kommen eine oder mehrere Verbindungen aus der Gruppe Ameisensäure, Essigsäure, Propionsäure, Fumarsäure, Milchsäure, Weinsäure, 9-Undecylensäure, Sorbinsäure und Benzoesäure in Frage. Wenn auch alle der genannten Verbindungen einzeln oder in Kombination miteinander als Carbonsäurekomponente der Desinfektionsmittel verwendbar sind, so ist es doch erfindungsgemäß bevorzugt, als Carbonsäure Milchsäure in den oben genannten Mengen zu verwenden.

Eine weitere essentielle Wirkstoffkomponente der erfindungsgemäßen Desinfektionsmittel sind mikrobizid wirksame stickstoffhaltige organische Verbindungen, von denen erfindungsgemäß entweder eine oder mehrere in Kombination miteinander in das flüssige, wasserhaltige Desinfektionsmittel eingearbeitet werden können. Die stickstoffhaltigen organischen Verbindungen sind erfindungsgemäß bevorzugt in Mengen von 0,05 bis 1,0, besonders bevorzugt in Mengen von 0,1 bis 0,5 Gew.-% Aktivsubstanz, bezogen auf das Gesamtgewicht des Desinfektionsmittels, vorhanden.

Als stickstoffhaltige organische Verbindungen können alle Verbindungen eingesetzt werden, die in den genannten Konzentrationen in Desinfektionsmitteln eine ausreichende mikrobizide Wirksamkeit aufweisen. Als weitere Voraussetzung müssen die für die vorliegenden Zwecke geeigneten stickstoffhaltigen organischen Verbindungen ohne Probleme in die flüssigen, wasserhaltigen Desinfektionsmittel eingearbeitet werden können, ohne daß dies zu Phasentrennungen oder zu Wechselwirkungen im Sinne einer Minderung der mikrobiziden Wirksamkeit in Gegenwart der anderen Desinfektionsmittelbestandteile führt.

Im weiteren bevorzugten Ausführungsformen der Erfindung enthalten die Desinfektionsmittel als stickstoffhaltige organische Verbindung eine oder mehrere mikrobizid wirksame Biguanidverbindungen. Diese können ausgewählt sein aus Verbindungen aus der Gruppe der Oligohexamethylenbiguanide der allgemeinen Formel (I)

$$\left[ (CH_2)_6-NH-\underset{\underset{NH}{\parallel}}{C}-NH-\underset{\underset{NH}{\parallel}}{C}-NH \right]_n \qquad (I)$$

in der n eine Zahl von wenigstens 2, vorzugsweise von 4 bis 6 ist, sowie der mikrobizid wirksamen Bis-biguanide sowie der wasserlöslichen, nichttoxischen Additionssalze der beiden genannten Verbindungsklassen.

Die oligomeren Biguanide der oben genannten allgemeinen Formel (I) und ihre wasserlöslichen, nichttoxischen Salze, die erfindungsgemäß als Biguanidverbindung eingesetzt werden können, sowie die Herstellung derartiger Verbindungen sind in den GB-PSen 702 268 und 1 152 243 sowie in der DE-OS 24 37 844 beschrieben. Beispiele von derartigen Biguanidsalzen, die sich für den Einsatz in den erfindungsgemäßen Desinfektionsmitteln besonders gut eignen, sind die entsprechenden wasserlöslichen Mineralsäuresalze, insbesondere die Hydrochloride. Besonders bevorzugt wird das Oligo-hexamethylenbiguanidhydrochlorid eingesetzt, das unter dem Handelsnamen "Vantocil® IB" von der Firma ICI kommerziell erhältlich ist.

Weitere Verbindungen, die in ebenfalls bevorzugten Ausführungsformen als stickstoffhaltige organische Verbindungen mit mikrobizider Wirksamkeit in den Desinfektionsmitteln enthalten sein können, sind Kokosalkylpropylendiaminguanidiniumdiacetat, N,N′-(1,10-Decandiyl-di-1[4H]-pyridinyl-4-yliden-)bis-(1-octanamin-)dihydrochlorid und $N^3$-Kokosalkylguanidiumhydrochlorid. Außerdem ist als stickstoffhaltige organische Verbindung auch 5-Amino-1,3-bis-(2-ethylhexyl-)5-methyl-hexanhydropyrimidin geeignet. Diese, ebenfalls unter dem Begriff "mikrobiell wirksame stickstoffhaltige organische Verbindungen" zu fassenden Stoffe führen bei ihrer Verwendung in den Desinfektionsmitteln zu einer guten bis sehr guten mikrobiziden Wirksamkeit in Synergismus mit den anderen, essentiellen Desinfektionsmittelkomponenten. Die eine oder mehrere der genannten Verbindungen enthaltenden Mittel zeigen besonders gute Ergebnisse bei der Haut- und Schleimhautdesinfektion.

Als mikrobizid wirksame stickstoffhaltige organische Verbindungen kann die erfindungsgemäße Kombination auch eine Verbindung aus der bekannten Klasse der Bis-biguanide enthalten. Solche Bis-biguanide sind in der einschlägigen Patentliteratur mannigfach vorbeschrieben. In diesem Zusammenhang wird insbesondere verwiesen auf EP-OS 0 024 031, US-PS 2 684 924, US-PS 2 990 425, US-PS 3 468 898, US-PS 4 022 834, US-PS 4 053 636, DE-OS 22 12 259 und DE-OS 26 27 548. Im einzelnen seien die folgenden Beispiele genannt: 1,2-Bis-($N^5$-p-chlorphenyl-$N^1$-biguanido)-ethan, 1,2-Bis-($N^5$-p-nitrophenyl-$N^1$-biguanido)-ethan, 1,2-Bis-($N^5$-p-hydroxyphenyl-$N^1$-biguanido)-ethan, 1,2-Bis-($N^5$-p-chlorbenzyl-$N^1$-biguanido)-ethan, 1,2-Bis-($N^5$-p-bromphenyl-$N^5$-hezyl-$N^1$-biguanido)-ethan, 1,2-Bis-($N^5$-p-chlorphenyl-$N^5$-2-ethylphenyl-$N^1$-biguanido)-ethan, 1,2-Bis-($N^5$-p-chlorphenyl-$N^1$-ethyl-$N^1$-biguanido)-ethan, 1,2-Bis-($N^5$-p-methoxyphenyl-$N^1$-biguanido)-ethan, 1,2-Bis-($N^5$-p-methylphenyl-$N^1$-biguanido)-ethan, 1,2-Bis-($N^5$-3,5-dimethylphenyl-$N^1$-biguanido)-ethan, 1,2-Bis-($N^5$-2,6-dichlorphenyl-$N^1$-biguanido)-ethan, 1,2-Bis-($N^5$-2,6-dimethylphenyl-$N^1$-biguanido)-ethan, 1,4-Bis-($N^5$-p-chlorphenyl-$N^1$-biguanido)-butan, Bis-($N^5$-p-chlorphenyl-$N^1$-biguanido)-methan und 1,3-Bis-($N^5$-p-chlorphenyl-$N^1$-biguanido)-propan.

In einer weiteren bevorzugten Ausführungsform der vorliegenden Erfindung werden als mikrobizid wirksame stickstoffhaltige organische Verbindung den erfindungsgemäßen Desinfektionsmitteln wasserlösliche Salze der oben genannten Bis-biguanide zugesetzt. Hierbei handelt es sich üblicherweise um Salze solcher Säuren, die zu nichttoxischen, von daher also unbedenklichen Additionssalzen führen. Aus der Gruppe dieser Verbindungen, die insbesondere die wasserlöslichen, nichttoxischen Additionssalze anorganischer Mineralsäuren und niedere, d.h. bis ca. 6 C-Atome enthaltender Carbonsäuren umfassen, sind die Hydrochloride, Acetate und Gluconate der oben genannten Bis-biguanide besonders bevorzugt.

Mit Vorteil werden als organische Stickstoffkomponente den erfindungsgemäßen Desinfektionsmitteln das 1,1′-Hexamethylen-bis-[5-(4-chlorphenyl)-biguanid] oder Kokosalkylpropylendiaminguanidin zugesetzt, deren Salze, bevorzugt also die Hydrochloride, Acetate oder Gluconate, eine besonders hohe mikrobizide Wirksamkeit aufweisen und die sich besonders gut in die erfindungsgemäßen Desinfektionsmittel einarbeiten lassen. Die erste der genannten Verbindungen ist als Gluconat unter dem Handelsnamen "Chlorhexidin$^R$" kommerziell erhältlich und wird der Einfachheit halber auch in dieser Form eingesetzt. Neben der soeben genannten Verbindung ist in den bevorzugten Ausführungsformen der erfindungsgemäßen Desinfektionsmittel das unter dem Handelsnamen "Vantocil$^R$ IB" erhältliche Oligohexamethylenbiguanidhydrochlorid als besonders bevorzugte mikrobizid wirksame Biguanidverbindung anzusehen. Außerdem kann mit Vorteil auch das unter dem Handelsnamen "Hexetidin$^R$" erhältliche 5-Amino-1,3-bis-(2-ethylhexyl-)5-methyl-hexahydropyrimidin als stickstoffhaltige organische Verbindung verwendet werden.

Als mikrobizid wirksame, stickstoffhaltige organische Verbindungen können die Desinfektionsmittel auch eine oder mehrere quartäre Ammoniumverbindungen in einer Menge von 0,05 bis 0,1 Gew.-% enthalten. Die mikrobizide Wirkung derartiger quartärer Ammoniumverbindungen, die allein oder in Mischungen auch neben einer oder mehreren der genannten anderen stickstoffhaltigen organischen Verbindungen eingesetzt werden können, ist aus dem Stand der Technik bekannt. Erfindungsgemäß eignen sich als quartäre Ammoniumverbindungen bevorzugt N-Alkyl-N.N-dimethylbenzylammoniumchlorid mit langkettigen Fettalkylresten mit 12 bis 18 C-Atomen und/oder n-Decyloctyldimethylammoniumchlorid und/oder Di-n-octyldimethylammoniumchlorid und/oder Di-n-decylmethylalkoxyammoniumpropionat mit 1 bis 6 C-Atomen im Alkoxyrest und/oder Di-n-decyl-dimethylammoniumchlorid. Mit einer oder mehreren der genannten quartären Ammoniumverbindungen läßt sich ebenfalls eine synergistische mikrobizide Wirkung, zusammen mit den anderen essentiellen Desinfektionsmittelkomponenten, erreichen.

Die erfindungsgemäßen Desinfektionsmittel enthalten außerdem als essentielle Komponente geringe Mengen an antimikrobiell wirksamen Phenolverbindungen. Dabei ist es möglich, eine einzelne antimikrobiell wirksame Phenolverbindung als Zusatz vorzusehen; es kann jedoch auch vorteilhaft sein, mehrere antimikrobiell wirksame Phenolverbindungen in Kombination miteinander zuzusetzen und damit besonders vorteilhafte Effekte zu erzielen. Diese liegen einerseits darin, daß gegebenenfalls vorhandene Wirkungslücken, beispielsweise gegenüber einzelnen gramnegativen Bakterien und Pilzen, abgedeckt werden können; andererseits zeigte sich bei der Konzeption der vorliegenden Desinfektionsmittel überraschend, daß eine antimikrobiell wirksame Phenolverbindung oder auch eine Kombination mehrerer derartiger Verbindungen eine synergistische Wirkungssteigerung der sonstigen, antimikrobiell wirksamen Komponenten hervorzurufen vermag. Daher ist es besonders bevorzugt, eine Kombination mehrerer antimikrobiell wirksamer Phenolverbindungen als Zusatz zu den erfindungsgemäßen Desinfektionsmitteln vorzusehen.

Die Menge an derartigen antimikrobiell wirksamen Phenolverbindungen liegt in einer bevorzugten Ausführungsform im Bereich von 0,01 bis 0,2, bevorzugt von 0,05 bis 0,01 Gew.-% Aktivsubstanz, bezogen auf das Gesamtgewicht des Desinfektionsmittels.

Als mikrobizid wirksame Phenolverbindung im Sinne der vorliegenden Erfindung eignen sich insbesondere o-Phenylphenol, Benzylphenol, p-Chlor-m-kresol, 2.3.4.6-Tetrachlorphenol, 2.4-Dichlorphenol, Monochlorphenol, o-Benzyl-p-chlorphenol, 2-Cyclopentyl-4-chlorphenol, ein- oder mehrfach chlorierte Xylole, Resorcin, 3-Hydroxy-p-cymol (Thymol), 4-Propenylanisol (Anethol), 4-Allyl-2-methoxyphenol (Eugenol), 3-Isopropyl-2-methylphenol (Carvacrol), Salicylsäurephenylester (Salol) und auch - soweit toxikologisch unbedenklich und wasserlöslich - die Alkalimetallsalze, bevorzugt die wasserlöslichen Natriumsalze der genannten Phenolverbindungen. Aus dieser Gruppe werden mit besonderem Vorteil ein oder mehrere Verbindungen aus der Gruppe o-Phenylphenol, Anethol, Eugenol, Thymol und Salicylsäurephenylester sowie deren wasserlösliche Natriumsalze verwendet. Die genannten phenolischen Verbindungen sind synthetisch herstellbar und können somit in reiner Form einzeln oder in beliebigen Mischungen miteinander den erfindungsgemäßen Desinfektionsmitteln zugesetzt werden. Bekanntermaßen sind jedoch auch mehrere der genannten Verbindungen aus natürlichen Quellen erhältlich. In etherischen Ölen, die auch in großen Maßstab aus pflanzlichen Rohmaterialien gewonnen werden können, sind in der Regel zahlreiche der genannten mikrobizid wirksamen phenolischen Verbindungen in mehr oder weniger großen Mengen enthalten. Vom Rahmen der vorliegenden Erfindung wird es ebenfalls umfaßt, die mikrobizid wirksamen Phenolverbindungen aus den oben genannten Gruppen einzeln oder in beliebigen Mischungen miteinander zumindest teilweise in Form von etherischen Ölen natürlicher Herkunft den erfindungsgemäßen Desinfektionsmitteln zuzusetzen.

Damit wird nicht nur erreicht, daß der oben beschriebene synergistische Effekt eintritt, d.h. die phenolischen Verbindungen die mikrobizide Wirkung der anderen, oben genannten essentiellen Komponenten synergistisch unterstützen. Vielmehr wird auch -was beispielsweise für Desinfektionsmittel für den Mund- und Rachenraum als Nebeneffekt erwünscht ist - den erfindungsgemäßen Desinfektionsmitteln ein bestimmter Geschmack verliehen, der die Anwendung dieser Mittel für den Patienten eher akzeptabel macht. In dem Fall, in dem eine oder mehrere der oben genannten phenolischen Verbindungen den erfindungsgemäßen Desinfektionsmitteln in Form natürlicher Konzentrate etherischer Öle zugesetzt werden, können beispielsweise die phenolischen Verbindungen in Form von Anisöl und/oder Sternanisöl und/oder Basilikumöl und/oder Fenchelöl und/oder Majoranöl und/oder Nelkenöl und/oder Oreganoöl und/oder Pimentöl und/oder Salbeiöl und/oder Thymianöl und/oder Zimtöl zugesetzt werden. Dabei ist es für die mikrobizide wie auch die synergistische Wirkung der Phenolverbindungen aus der oben genannten Gruppe gleichgültig, ob sie aus synthetischen oder natürlichen Quellen stammen; es wird in jedem Fall eine gute Wirkung erzielt.

Wie die Strukturen der oben genannten phenolischen Verbindungen zeigen, und wie auch allgemein bekannt ist, enthalten ihre Moleküle einen oder mehrere aromatische Reste, so daß sich die genannten Verbindungen vergleichsweise schlecht in wäßrige Desinfektionsmittel einarbeiten lassen. Es ist deswegen in einer bevorzugten Ausführungsform der Erfindung möglich, daß den Desinfektionsmitteln zusätzlich einer oder mehrere Emulgatoren zugegeben werden. Derartige Emulgatoren werden in einem Mengenverhältnis phenolische Verbindung : Emulgator von 2 : 1 bis 1 : 2, bevorzugt im Mengenverhältnis 1 : 1 eingearbeitet. Als Emulgatoren kommen neben Addukten von 35 Mol Ethylenoxid (EO) an hydriertes Rizinusöl - derartige Produkte sind unter dem Handelsnamen "Cremophor$^R$ RH 410" bzw. "Eumulgin$^R$ HRE 40" im Handel - auch Addukte von 30 und mehr Mol EO an nichthydriertes Rizinusöl und Laurinsäuremonoglycerinester in Frage, die unter den Handelsnamen "Eumulgin$^R$ RO 40" bzw. "Lauricidin" im Handel sind.

Als weitere essentielle Komponente enthalten die erfindungsgemäßen Desinfektionsmittel Wasser. Die Wassermenge ist üblicherweise so bemessen, daß sie sich mit der Summe der weiter oben genannten essentiellen Komponenten der erfindungsgemäßen Desinfektionsmittel zu 100 Gew.-% aufsummiert. Sie liegt beispielsweise - legt man die oben genannten Mengen der bisher genannten essentiellen Desinfektionsmittel-Komponenten zugrunde - im Mengenbereich zwischen 72,6 und 91,6 Gew.-%.

Außer den genannten, als essentiell bezeichneten Komponenten der erfindungsgemäßen flüssigen, wasserhaltigen Desinfektionsmittel können noch weitere Wirkstoffe und/oder Hilfsstoffe darin enthalten sein, die in besonders bevorzugten Ausführungsformen nicht nur zusätzliche Effekte erbringen, sondern auch die mikrobizide Wirkung der essentiellen Komponenten gegebenenfalls noch synergistisch zu steigern vermögen.

In Ergänzung zu den oben genannten Komponenten können die erfindungsgemäßen Desinfektionsmittel zusätzlich noch einen oder mehrere Farbstoffe in Mengen von 0,01 bis 0,1 Gew.-% Aktivsubstanz, bezogen auf das Gesamtgewicht des Desinfektionsmittels, enthalten. Die Zugabe derartiger Farbstoffe verfolgt den Zweck, die behandelten Stellen der Schleimhaut zur Kontrolle der Desinfektionsmaßnahme anzufärben. Da es sich bei den erfindungsgemäßen Desinfektionsmitteln um Arzneimittel handelt, sind als Farbstoffe nur die vom jeweils gültigen Arzneimittelgesetz (AMG §§ 6(I) und (II) und 83(I) und (II) in Verbindung mit der Arzneimittelfarbstoffverordnung vom 01.07.1983) zugelassenen Farbstoffe geeignet. Geeignete Farbstoffe gemäß der Erfindung (in Klammern ist hinter der Bezeichung die EG-Nummer gemäß Anlage zu § 1 der Arzneimittelfarbstoffverordnung angegeben) sind einer oder mehrere Farbstoffe aus der Gruppe Dinatriumsalz der 1′-Hydroxy-1.2′-azonaphthalin-4.4′-disulfonsäure (Azorubin, E 122), Dinatriumsalz der 6-Hydroxy-5-(4-sulfophenylazo-)2-naphthalinsulfonsäure (Gelborange S, E 110), Tetranatriumsalz der 4-Sulfo-phenylazo-4-(7-sulfonaphthalin-)1-azo-2-(8-acetamido-1-hydroxy-3.5-naphthalin-disulfonsäure) (Brilliant Schwarz BN, E

151 und dem Extrakt aus Dactylopius coccus (Carmin, E 120). Wie beschrieben, können die genannten Farbstoffe einzeln oder in beliebigen Mischungen miteinander verwendet werden; aufgrund ihrer sehr starken Färbeeigenschaften genügen schon sehr kleine Mengen der genannten Farbstoffe oder ihrer Mischungen, die sich schon an der unteren Grenze des angegebenen Bereichs, also bei 0,005 Gew.-%, einstellen können.

Zur Verstärkung der mikrobiziden Wirksamkeit und außerdem zur Erhöhung der Remanenz der erfindungsgemäßen Desinfektionsmittel können darin zusätzlich zu den genannten oder auch anstelle zumindest der potentiellen Komponenten auch ein oder mehrere Acridinverbindungen enthalten sein. Deren Mengen liegen üblicherweise im Bereich von 0,01 bis 0,2 Gew.-% Aktivsubstanz, bezogen auf das Gesamtgewicht des Desinfektionsmittels. Derartige Acridinverbindungen weisen bekanntermaßen nicht nur mikrobizide Eigenschaften auf, sondern können auch zusätzlich noch Farbstoffeigenschaften haben und damit auch als Markierungsmittel zum Nachweis der erfolgten Desinfektion auf der Schleimhaut im schon oben beschriebenen Sinne genutzt werden. Bei Verwendung einer oder mehrerer der nachfolgend genannten Acridinverbindungen würde also die Verwendung eines Farbstoffs aus der oben genannten, für Arzneimittel zugelassenen Klasse der Farbstoffe entbehrlich.

In einer bevorzugten Ausführungsform der Erfindung werden Acridinverbindungen vom Typ des Proflavin (3.6-Diamino-acridin-sulfat), Trypaflavin (3.6-Diamino-10-methylacridiniumchlorid), Ethacridin (2-Ethoxy-6.9-diaminoacridinlactat) und Acriflavin (75 % 3.6-Diamino-10-methylacridiniumchlorid + 25 % 3.6-Diaminoacridin-monohydrochlorid) verwendet.

In einer weiteren bevorzugten Ausführungsform der vorliegenden Erfindung können den Desinfektionsmitteln zusätzlich noch ein oder mehrere Komplexbildner für Metallionen zugesetzt werden. Es ist nämlich bekannt, daß sich einige Mikroorganismen unter geeigneten Bedingungen einen zusätzlichen Schutz durch Ausbildung von schleimhaltigen Hüllen aufbauen. Diese Situation dürfte bei Mikroorganismen auf den Schleimhäuten immer gegeben sein. Natürliche Schleimstoffe enthalten stabilisierende Calcium- und Magnesiumionen. Eine Komplexierung der genannten Metallionen mit Hilfe eines Komplexbildners führte überraschend zu einer Destabilisierung der Schleimhülle. Als Calcium und Magnesium komplexierende Stoffe sind im verwendeten Medium wasserlösliche Komplexbildner geeignet. Sie werden den erfindungsgemäßen Desinfektionsmitteln in Mengen von 0,01 bis 0,5 Gew.-% zugesetzt. Bevorzugte Komplexbildner für den genannten Zweck sind Ethylendiamintetraessigsäure (EDTA), Nitrilotriessigsäure (NTA), Hydroxyethandiphosphonsäure (HEDP) sowie eine Reihe weiterer, Komplexe mit Calcium und Magnesium bildender Carbonsäuren und Phosphonsäuren, sofern sie wasserlöslich sind.

Erfindungsgemäß kann es außerdem noch erwünscht sein, den Desinfektionsmitteln zusätzliche, die Rheologie auf einen bestimmten Wert einstellende Substanzen zuzusetzen. Derartige Rheologie-Einsteller können in Mengen von 1 bis 10 Gew.-%, bevorzugt von 3 bis 6 Gew.-%, bezogen auf das Gesamtgewicht des Desinfektionsmittels, zugegen sein. Als Rheologie-Einsteller werden in einer weiteren bevorzugten Ausführungsform eine oder mehrere Substanzen aus der Gruppe Polyvinylpyrrolidon, Methylcellulose, Hydroxyethylcellulose, Hydroxypropylcellulose und wasserlösliche Polyacrylate zugesetzt, von denen Polyvinylpyrrolidon besonders bevorzugt ist. Beispielsweise kann zur Einstellung der Rheologie Polyvinylpyrrolidon mit einem K-Wert im Bereich von 88 bis 96 und einem Wassergehalt von 5 Gew.-% zugesetzt werden, wie es unter den Namen "Luviskol$^{R}$" von der Firma BASF kommerziell erhältlich ist. Damit wird eine bessere Applikation der erfindungsgemäßen Desinfektionsmittel auf den Haut- und Schleimhautbereichen ermöglicht.

Außerdem ist es möglich und im Sinne der Erfindung besonders bevorzugt, den Desinfektionsmitteln zusätzlich ein oder mehrere Alkyl- und/oder Alkenylglykoside mit 8 bis 16 C-Atomen, vorzugsweise mit 10 bis 14 C-Atomen im Alkyl- oder Alkenylrest zuzusetzen. Die Alkylgruppen, die geradkettig oder verzweigt sein können, umfassen damit die Alkylreste Octyl, Nonyl, Decyl, Undecyl, Dodecyl, Tridecyl, Tetradecyl, Pentadecyl und Hexadecyl: Die Alkenylreste sind die ungesättigten Homologen der genannten Alkylreste und können ebenfalls geradkettig oder verzweigt sein. Die erfindungsgemäß gegebenenfalls zusetzbaren Alkyl- und Alkenylglykoside können dabei Monoglykoside oder auch Polyglykoside sein, die 2 bis 8 Glykosidreste, vorzugsweise 2 oder 3 Glykosidreste aufweisen. Derartige Alkyl- oder Alkenylglykoside sind erfindungsgemäß in Mengen von 0,1 bis 2 Gew.-% in den Desinfektionsmitteln enthalten. Sie stellen eine bekannte Substanzklasse dar, die über gängige Methoden der organischen Synthese zugänglich ist, siehe beispielsweise US-PSen 3 839 318, 3 707 535 und 3 547 828, DE-OSen 19 05 523, 19 43 689, 20 36 472 und 30 01 064 sowie EP-OS 0 077 167. Ihre Herstellung erfolgt zweckmäßigerweise durch Umsetzung von Glucose oder Oligosacchariden mit aliphatischen Alkoholen mit 8 bis 16 C-Atomen, wobei die Alkohole geradkettig oder verzweigt, gesättigt, einfach oder mehrfach olefinisch ungesättigt sein und beispielsweise bis zu drei Doppelbindungen aufweisen können. Bevorzugt sind Glykoside, deren Alkyl- und/oder Alkenylrest 8, 10, 14, oder 16 C-Atome aufweist, insbesondere solche Reste, die geradkettig sind. Die Alkyl- oder Alkenylreste können von einem bestimmten Alkohol abgeleitet sein, beispielsweise von Laurylalkohol oder Oleyalkohol, sie können aber auch von Alkoholgemischen stammen, wie sie bei der großtechnischen Fettalkoholsynthese aus den natürlich vorkommenden Fetten und Ölen anfallen. Bezüglich des Saccharidrestes gilt, daß sowohl Monoglykoside, bei denen ein cyclischer Zuckerrest an den Fettalkohol gebunden ist, geeignet sind, als auch oligomere Glykoside mit vorzugsweise bis zu 8, insbesondere bis zu 3 glykosidisch gebundenen Glucose- oder Maltoseresten. Dabei stellt die Anzahl der Zuckerreste einen statistischen Mittelwert dar, dem die

bei diesen Produkten übliche Verteilung zugrunde liegt. Alkyl- und Alkenylglykoside mit 10 bis 14 C-Atomen in dem aus dem Alkohol stammenden Kohlenwasserstoffrest und mit 1 bis 2 Glykosidresten, vorzugsweise mit durchschnittlich 1 bis 1,5 Glycosidresten, sind erfindungsgemäß besonders bevorzugt.

Außer den genannten Komponenten können den erfindungsgemäßen flüssigen, wasserhaltigen Desinfektionsmitteln noch weitere Substanzen zugesetzt werden, die im Rahmen besonderer Verwendungsweisen oder Applikationsformen spezielle Aufgaben zu erfüllen haben. So können beispielsweise zusätzlich noch geschmacksverbessernde oder -verändernde Stoffe zugesetzt werden, wenn die Desinfektionsmittel im Mund- oder Rachenraum angewendet werden sollen. Darunter fallen beispielsweie Pfefferminzöl oder andere etherische Öle, die den Geschmack und Geruch der verwendeten Mittel auf für den Patienten angenehme Weise verändern. Diese Aufgabe kann - wie oben beschrieben - auch durch die mikrobizid wirksamen phenolischen Verbindungen übernommen werden, insbesondere dann, wenn diese in Form von etherischen Ölen natürlicher Provenienz in die erfindungsgemäßen Desinfektionsmittel eingesetzt werden.

Haut- und Schleimhautdesinfektionsmittel werden in der Regel auf saure pH-Werte im Bereich von 3,5 bis 7, bevorzugt im Bereich von 4 bis 6, eingestellt. Dabei werden für die pH-Wert-Einstellung mit Vorteil die als essentielle Komponente zugesetzten organischen Carbonsäuren genutzt, die zusätzlich auch die oben beschriebene mikrobizide Wirkung aufweisen. Gleichzeitig haben die oben genannten Säuren auch noch den Vorteil, daß sie als natürlicher Puffer wirken können und damit drastische pH-Wert-Änderungen abzufangen in der Lage sind.

Eine besonders bevorzugte Ausführungsform der erfindungsgemäßen Desinfektionsmittel stellt die folgende Zusammensetzung dar:

| | |
|---|---|
| 12 bis 15 Gew.-% | Ethanol, |
| 0,3 bis 0,6 Gew.-% | $H_2O_2$, |
| 0,2 bis 0,4 Gew.-% | Milchsäure, |
| 0,05 bis 0,5 Gew.-% | Chlorhexidingluconat oder einer quartären Ammoniumverbindung |
| 0,05 bis 0,1 Gew.-% | einer Mischung aus 91,4 % natürlichem Pfefferminzöl mit einem Gehalt von ca. 90 % Menthol,4 % Salicylsäurephenylester, 3,5 % Anethol, 0,6 % Eugenol und 0,5 % Thymol, |
| 0 bis 0,1 Gew.-% | Orthophenylphenol, |
| 3 bis 6 Gew.-% | PVP (K-Wert 88 bis 96, Wassergehalt: 5 Gew.-%) und |
| Wasser | in einer Menge, die die genannten Komponenten zu 100 Gew.-% aufsummiert. |

Alle Bestandteile der erfindungsgemäßen Desinfektionsmittel sind an sich bekannte Substanzen. Die Mittel werden durch einfaches Vermischen der oben näher beschriebenen Komponenten hergestellt. Dies kann ebenfalls in an sich aus dem Stand der Technik bekannter Weise geschehen.

Die erfindungsgemäßen Desinfektionsmittel fallen in mehr oder weniger niedrigviskoser Form an. Ihre Viskosität kann - wie oben beschrieben - weitgehend durch den Zusatz der genannten Rheologie-Einsteller geregelt werden. Soll ein eher höherviskoses Desinfektionsmittel erhalten werden, kann ein Verdicker, beispielsweise PVP in einer bevorzugten Ausführungsform der Erfindung, in den oben beschriebenen Mengen zugesetzt werden. Dadurch wird die Applikation in bestimmten Fällen, beispielsweise bei Desinfektionsmaßnahmen im Genital- oder Urogenitalbereich, erleichtert.

Sofern ein dünnflüssiges, wasserhaltiges Desinfektionsmittel erhalten werden soll, das sich beispielsweise gut versprühen läßt, kann dieses ohne Zusatz eines Verdickers konfektioniert werden. Für die Applikation, beispielsweise im Mund-/Rachenraum, kann man zum Versprühen der die erfindungsgemäßen Desinfektionsmittel Druckluft anwenden oder ein in der Aerosoltechnik für die Herstellung von Sprays gebräuchliches Treibmittel einsetzen.

Gemäß der Erfindung werden die flüssigen, wasserhaltigen Desinfektionsmittel für Desinfektionsmaßnahmen auf der Haut bzw. den Schleimhäuten verwendet. Sie zeigen dabei - trotz einer Alkoholkonzentration $<$20 Gew.-% - ein hervorragendes Desinfektionsergebnis. Bei der Anwendung der Desinfektionsmittel werden die zu desinfizierenden Haut- oder Schleimhautpartien der Einwirkung des Desinfektionsmittels ausgesetzt.

Die Erfindung wird durch die nachfolgenden Beispiele näher erläutert.

Beispiel 1 bis 16

Durch Zusammenmischen der in der nachfolgenden Tabelle 1 angegebenen Komponenten wurden erfindungsgemäße Desinfektionsmittel unterschiedlicher Zusammensetzung hergestellt. Die Mengenangaben zu den einzelnen Komponenten sind ebenfalls der nachfolgenden Tabelle 1 zu entnehmen.

Als "etherisches Öl" wird in der Tabelle 1 eine Mischung bezeichnet, die aus den nachfolgenden Komponenten besteht:

| | |
|---|---|
| 91,4 % | natürliches Pfefferminzöl mit einem Gehalt von ca. 90 % Menthol; |
| 4,0 % | Salicylsäurephenylester (Salol$^R$); |

3,5 % Anethol;
0,6 % Eugenol und
0,5 % Thymol.

Als "Emulgator" wird das unter dem Handelsnamen "Cremophor[R] RH 410" im Handel erhältliche Decahydrat eines Additionsproduktes von 35 Mol Ethylenoxid (EO) an hydriertes Rizinusöl bezeichnet.

Unter "QAV" wird in Tabelle 1 die quartäre Ammoniumverbindung N-Alkyl-N.N-dimethyl-benzylammoniumchlorid mit 12/14 C-Atomen im Alkylrest bezeichnet.

Mit "HEDP" wird der Komplexbildner Hydroxyethandiphosphonsäure bezeichnet.

Die Zusammensetzung der Desinfektionsmittel nach den Beispielen 1 bis 16 zeigt die nachfolgende Tabelle 1; die Mengen der einzelnen Komponenten sind in Gew.-% angegeben. Die restliche Menge bis zu 100 Gew.-% ist Wasser.

Tabelle 1

| Zusammensetzung der Desinfektionsmittel nach Beispielen 1 bis 16 (Mengen in Gew.-%) | | | | | | | | |
|---|---|---|---|---|---|---|---|---|
| Komponente | **Beispiel** | | | | | | | |
| | 1 (Vgl.) | 2 (Vgl.) | 3 (Vgl.) | 4 | 5 | 6 | 7 (Vgl.) | 8 |
| Ethanol | | | 20 | 20 | 20 | 20 | | 10 |
| i-Propanol | 20 | 20 | | | | | | |
| Wasserstoffperoxid | 0,5 | 0,5 | 0,5 | 0,5 | 0,5 | 0,5 | 0,5 | 0,5 |
| Milchsäure | 0,2 | 0,2 | 0,2 | 0,2 | 0,2 | 0,2 | 0,2 | 0,2 |
| Chlorhexidindigluconat | | 0,1 | 0,1 | 0,1 | | 0,1 | | |
| etherisches Öl[1)] | | | | 0,1 | 0,1 | | 0,1 | 0,1 |
| Emulgator[1)] | | | | 0,1 | 0,1 | 0,1 | 0,1 | 0,1 |
| Ethacridin | | | | | | | | |
| Acriflavin | | | | | | | | |
| HEDP[1)] | | | | | | | | |
| o-Phenylphenol-Na | | | | | | | | |
| QAV[1)] | | | | | | | | |
| PVP | | | | | | | | |
| Wasser | Rest | Rest | Rest | Rest | Rest | Rest | Rest | Rest |
| Komponente | **Beispiel** | | | | | | | |
| | 9 | 10 | 11 | 12 | 13 | 14 | 15 | 16 |
| Ethanol | 10 | 10 | 10 | 10 | 10 | 10 | 15 | 15 |
| i-Propanol | | | | | | | | |
| Wasserstoffperoxid | 0,5 | 0,5 | 0,5 | 0,5 | 0,5 | 0,5 | 0,5 | 0,5 |
| Milchsäure | 0,2 | 0,2 | 0,2 | 0,2 | 0,2 | 0,2 | 0,2 | 0,2 |
| Chlorhexidindigluconat | | | | 0,3 | 0,3 | 0,3 | 0,1 | |
| etherisches Öl[1)] | 0,1 | 0,1 | 0,1 | 0,05 | 0,05 | 0,1 | 0,05 | 0,1 |
| Emulgator[1)] | 0,1 | 0,1 | 0,1 | 0,05 | 0,05 | 0,1 | 0,05 | 0,1 |
| Ethacridin | 0,1 | | 0,1 | | | | | |
| Acrilavin | | 0,1 | 0,1 | | | | | |
| HEDP[1)] | | | | | 0,1 | | | |
| o-Phenylphenol-Na | | | | | | | 0,05 | 0,05 |
| QAV[1)] | | | | | | | | 0,05 |
| PVP | | | | | | | 5,0 | |
| Wasser | Rest | Rest | Rest | Rest | Rest | Rest | Rest | Rest |

[1)] Erläuterungen siehe vorangehender Text

Die antimikrobielle Wirksamkeit der erfindungsgemäßen Desinfektionsmittel wurde gegenüber folgenden Testkeimen bestimmt:

1. Staphylococcus aureus ATCC 6538;
2. Streptococcus faecalis.

Die Keimreduktion unter Bestimmung des Restkeimgehaltes pro ml wurde mit Hilfe des quantitativen Suspensionsversuchs nach den Richtlinien für die Prüfung und Bewertung chemischer Desinfektionsverfahren der Deutschen Gesellschaft für Hygiene und Mikrobiologie (DGHM) bestimmt, die in Zdl. Bakt. Hyg. I. Abt. Orig. B 172, 538 bis 539 (1981) beschrieben sind.

Beispiel 17 (Vergleichsbeispiel)

Die mikrobiologische Prüfung der Desinfektionsmittel der Beispiele 1 und 2 erfolgte in dem oben genannten Suspensionstest mit dem Test-Mikroorganismus Staphylococcus aureus (siehe oben, 1.) wobei das Prüfverfahren den Schleimhautbedingungen dadurch angepaßt wurde, daß die Testsuspension zusätzlich mit Mucin, dem Hauptbestandteil des Schleims lebender Organismen, belastet wurde. Der Ausgangskeimgehalt der Keimsuspension betrug bei einem Verdünnungsverhältnis Desinfektionsmittel : Keim-Mucin-Gemisch von 9 ml : 1 ml 6 x $10^6$ Keime/ml, bei einem Verdünnungsverhältnis Desinfektionsmittel : Keim-Mucin-Gemisch von 7,5 ml : 2,5 ml 15 x $10^6$ Keime/ml. Als Vergleich wurde außerdem eine 1 %ige PVP-Jod-Lösung geprüft.

Die Ergebnisse sind der nachfolgenden Tabelle 2 zu entnehmen.

Tabelle 2

| Suspensionstest mit Vergleichsmitteln | | | | |
|---|---|---|---|---|
| Mittel aus Bsp. | Verhältnis Mittel : Keim-Mucin-Gemisch | Restkeimgehalt/ml nach | | |
| | | 1 min | 2,5 min | 5 min |
| 1 | 9 ml : 1 ml | 600 | <10 | <10 |
| 2 | | <10 | <10 | <10 |
| 1 % PVP-Jod | | 42 000 | 235 | <10 |
| 1 | 7,5 ml : 2,5 ml | 250 000 | 350 000 | 92 000 |
| 2 | | 150 000 | 20 500 | 70 |
| 1 % PVP-Jod | | 150 000 | 1 500 | <10 |

Ergebnis:

Die Testergebnisse zeigen, daß durch den Einsatz von Chlorhexidingluconat eine deutliche Wirkungssteigerung gegenüber der alleinigen Verwendung von Desinfektionsmitteln auf der Basis Alkohol/Wasserstoffperoxid/Carbonsäure erzeilt werden kann. Bei nahezu unverdünnter Anwendung (9 : 1) wird die Wirkung von üblicherweise verwendeten 1 %igen PVP-Jod-Lösungen übertroffen; bei einer Verdünnung auf 75 % der ursprünglichen Konzentration (7,5 : 2,5) wird die Wirkung der üblicherweise verwendeten PVP-Jod-Lösungen nahezu erreicht.

Beispiel 18

Das erfindungsgemäße Desinfektionsmittel des Beispiels 4 wurde gegenüber den Vergleichszusammensetzungen der Beispiele 2 und 3 geprüft. Dabei wurden die Einwirkungszeiten der Desinfektionsmittel gegenüber dem Beispiel 17 deutlich verkürzt und damit erschwerte, der Praxis entsprechende Bedingungen geschaffen.

In der nachfolgenden Tabelle 3 ist für die einzelnen Zusammensetzungen jeweils die Keimzahlreduktion $KR_t$ für eine bestimmte Einwirkzeit (hier 15, 30, 45 und 60 sec) im Vergleich zu Wasser standardisierter Härte (WSH) wiedergegeben. Die Keimzahlreduktion berechnet sich nach der Formel:

$$KR_t = \log KBE(WSH) - \log KBE(D)$$

in der

KBE(WSH) die Anzahl der koloniebildenden Einheiten nach Einwirkung von Wasser standardisierter Härte und
KBE(D) die Anzahl der koloniebildenden Einheiten nach Einwirkung des Desinfektionsmittels (D)

bedeuten.

Tabelle 3

| Suspensionstest mit Mitteln der Beispiele 2 bis 4 | | | | | |
|---|---|---|---|---|---|
| Bsp. | Testkeim* | Reduktionsfaktoren nach | | | |
| | | 15 sec | 30 sec | 45 sec | 1 min |
| 2 | Sta. aureus | >4,7 | >4,7 | >4,7 | >4,7 |
| 3 | Sta. aureus | 0,5 | 1,4 | 2,4 | 2,9 |
| 4 | Sta. aureus | >4,7 | >4,7 | >4,7 | >4,7 |
| 2 | Strep.faecalis | >4,1 | >4,1 | >4,1 | >4,1 |
| 3 | Strep.faecalis | 3,9 | 3,9 | 4,1 | 4,1 |
| 4 | Strep.faecalis | >4,1 | >4,1 | >4,1 | >4,1 |

* Ausgangskeimzahlen:
Sta.aureus = 44 x $10^7$/ml
Strep.faecalis = 19 x $10^7$/ml

Ergebnis:

Die mikrobiologische Prüfung zeigte, daß mit dem Zusatz eines geeigneten etherischen Öls gemäß der vorliegenden Erfindung ein synergistischer Effekt erzielt und die Wirkung der sonstigen Desinfektionsmittel-Bestandteile deutlich gesteigert werden kann.

Beispiel 19

Die synergistische Wirkungssteigerung eines Zusatzes von mikrobizid wirksamen phenolischen Verbindungen wird auch durch die folgende Testserie belegt, in der das Desinfektionsmittel gemäß Beispiel 3 (Vergleichsbespiel) mit den Desinfektionsmitteln der Beispiele 4 bis 7 verglichen wurde. Die Testsuspension wurde zusätzlich mit 0,2 % Rinderalbumin belastet. Die Ergebnisse sind der nachfolgenden Tabelle 4 zu entnehmen.

Tabelle 4

| Suspensionstest mit Mitteln der Beispiele 3 bis 7 | | | |
|---|---|---|---|
| Bsp. | Testkeim | Reduktionsfaktor nach | |
| | | 30 sec | 1 min |
| 7 | Staphylococcus aureus | 0,0 | 0,0 |
| 5 | Staphylococcus aureus | 0,9 | 2,5 |
| 6 | Staphylococcus aureus | 1,4 | 1,9 |
| 3 | Staphylococcus aureus | 3,1 | 4,0 |
| 4 | Staphylococcus aureus | 4,3 | 4,3 |

Erbebnis:

Der Suspensionstest zeigte, daß in Abwesenheit von Alkohol eine Desinfektionswirkung gar nicht erzielt werden konnte (Verbindung des Beispiels 7 (Vergleichsbeisplel)). Die deutlichste Reduktion der Keimzahl konnte mit einem Mittel gemäß der vorliegenden Erfindung erzeilt werden, das neben den Grundbestandteilen Alkohol, Wasserstoffperoxid und Carbonsäure noch eine Biguanidverbindung sowie eine phenolische, mikrobizid wirksame Verbindung mit einem zu ihrer Einarbeitung in das Desinfektionsmittel geeigneten Emulgator enthielt.

Beispiel 20

Eine weitere Steigerung der mikrobiziden Wirkung kann dadurch gezeigt werden, daß man erfindungsgemäßen Desinfektionsmitteln zur Komplexierung Schleim stabilisierender Metallionen (z.B. Calcium und Magnesium) geeignete Komplexbildner zusetzt. Im vorliegenden quantitativen Suspensionstest wurde die Testsuspension zusätzlich mit 10 % Mucin als Schleimbildner belastet.

Die Ergebnisse sind der nachfolgenden Tabelle 5 zu entnehmen.

Tabelle 5

Suspensionstest mit Mitteln der Beispiele 12 und 13

| Bsp. | Testkeim | Reduktionsfaktor nach 30 sec | 1 min | 2 min |
|---|---|---|---|---|
| 12 | Sta. aureus mit 10 % Mucin-Belastung | 0,1 | 0,6 | 2,3 |
| 13 | | 3,8 | 4,4 | 4,8 |

Ergebnis:

Wie der Suspensionstest in Gegenwart von 10 % Mucin zeigt, läßt sich in Gegenwart eines Komplexbildners die Zahl der koloniebildenden Einheiten deutlich reduzieren, wenn man einem Desinfektionsmittel gemäß der Erfindung einen geeigneten Komplexbildner zur Komplexierung der Schleim stabilisierenden Metallionen $Ca^{2+}$ und $Mg^{2+}$ zusetzt.

Beispiel 21

Um die Leistung einer besonders beanspruchten Variante eines erfindungsgemäßen Schleimhaut-Desinfektionsmittels an einer natürlichen Schleimhautflora zu zeigen, wurden Versuche mit der natürlichen Mund-, Glans-Penis-und Vaginalflora gesunder Versuchspersonen gemacht. Als Desinfektionsmittel wurde das Mittel des Beispiels 14 verwendet. Die mikrobiologische Prüfung erfolgte im quantitativen Suspensionstest auf Blutagar-Platten. Die Reduktionsfaktoren sind der nachfolgenden Tabelle 6 zu entnehmen.

Tabelle 6

| Suspension mit dem Mittel des Beispiels 14 | | | | | | |
|---|---|---|---|---|---|---|
| Keimart | Belastung | Reduktionsfaktor nach | | | | |
| | | 15 | 30 | 60 | 120 | 300 sec |
| nat.Mundflora | ohne Belastung | 1,6 | 1,8 | 2,3 | 3,5 | 3,6 |
| | mit 0,2% Albumin | 1,3 | 1,3 | 2,0 | 2,3 | 2,3 |
| nat. Glans-Penis-Flora | ohne Belastung | 2,0 | 1,6 | 2,3 | 2,5 | 3,6 |
| | mit 0,2% Albumin | 1,8 | 1,8 | 2,4 | 2,6 | 2,8 |
| nat. Vaginalflora | ohne Belastung | 2,1 | 2,7 | 4,2 | 5,0 | 6,4 |
| | mit 0,2% Albumin | 1,6 | 2,8 | 3,5 | 5,2 | 6,2 |

Ergebnis:

Wie der Tabelle zu entnehmen ist, vermag des Desinfektionsmittel des Beispiels 14 die zufälligen, vielfältig zusammengesetzten natürlichen Keimspektren des Rachen- und Urogenitalbereiches innerhalb von 1 min um 99 % zu reduzieren.

Beispiel 22

Der mit dem Desinfektionsmittel gemäß Beispiel 16 durchgeführte quantitative Suspensionstest sollte zeigen, daß es möglich ist, als stickstoffhaltige organische Verbindungen Ammoniumverbindungen einzusetzen und Orthophenylphenol zur Verstärkung ihrer Wirksamkeit zu verwenden. Die Ergebnisse des durchgeführten quantitativen Suspensionsversuchs, der an den aufgeführten Testkeimen unter einer Belastung der Testkeimsuspension mit 0,2 % Rinderalbumin durchgeführt wurde, sind der nachfolgenden Tabelle 7 zu entnehmen.

Tabelle 7

| Suspensionsversuch mit dem Mittel des Beispiels 16 | |
|---|---|
| Keimart | Red.-Faktor nach 1 min |
| Staphylococcus aureus | 6,3 |
| Escherichia coli | 6,6 |
| Pseudomonas aeruginosa | 6,7 |
| Candida albicans | 5,5 |

**Patentansprüche**

1. Flüssiges wasserhaltiges Schleimhautdesinfektionsmittel auf Basis Alkohol und Wasserstoffperoxid, enthaltend

   a) - einen oder mehrere Alkohole mit 2 bis 8 C-Atomen in einer Menge von 8 bis 25 Gew.-% Aktivsubstanz,
   b) - Wasserstoffperoxid oder eine in wässriger Phase Peroxid bildende Verbindung in einer Menge von 0,2 bis 0,7 Gew.-% Aktivsubstanz,
   c) - eine oder mehrere Carbonsäuren in einer Menge von 0,1 bis 0,5 Gew.-% Aktivsubstanz,
   d) - eine oder mehrere mikrobizid wirksame stickstoffhaltige organische Verbindungen aus der Gruppe der Oligohexamethylbiguanide der allgemeinen Formel (I),

   $$[(CH_2)_6-NH-\underset{\underset{NH}{\|}}{C}-NH-\underset{\underset{NH}{\|}}{C}-NH]_n$$

   in der n eine Zahl von wenigstens 2, vorzugsweise von 4 bis 6 ist, Bis-guanide, wasserlöslichen, nichttoxischen Additionssalze dieser beiden Verbindungsklassen, 5-Amino-1.3-bis-(2-ethylenhexyl-)5-methyl-hexahydropyromidin, Kokosalkylpropylendiaminguanidiniumdiacetat, N,N'-(1,10-decandiyldi-1-[4H]-pyridyl-4-yliden-)bis-1-octanamin-)dihydrochlorid, $N^3$-Kokosalkylguanidium hydrochlorid und quartären Ammoniumverbindungen in einer Menge von 0,05 bis 1 Gew.-% Aktivsubstanz,

   - gegebenenfalls eine oder mehrere mikrobizid wirksame phenolische Verbindungen in einer Menge von 0,01 bis 0,1 Gew.-% Aktivsubstanz,
   - gegebenenfalls noch weitere, in Desinfektionsmitteln übliche Wirkstoffe und/oder Hilfsstoffe und
   - Wasser in einer Menge, die die genannten Komponenten zu 100 Gew.-%, aufsummieren, Gew.-% jeweils bezogen auf das Gesamtgewicht des Schleimhautdesinfektionsmittels.

2. Desinfektionsmittel nach Anspruch 1, enthaltend einen oder mehrere Alkohole mit 2 bis 8 C-Atomen in einer Menge von 10 bis 20 Gew.-% Aktivsubstanz, bezogen auf das Gesamtgewicht des Desinfektionsmittels.

3. Desinfektionsmittel nach Anspruch 1, enthaltend Wasserstoffperoxid oder eine in wässriger Phase Peroxid bildende Verbindung in einer Menge von 0,3 bis 0,6 Gew.-% Aktivsubstanz, bezogen auf das Gesamtgewicht des Desinfektionsmittels.

4. Desinfektionsmittel nach Anspruch 1, enthaltend eine oder mehrere Carbonsäuren in einer Menge von 0,2 bis 0,4 Gew.-% Aktivsubstanz, bezogen auf das Gesamtgewicht des Desinfektionsmittels.

5. Desinfektionsmittel nach Anspruch 1, enthaltend eine oder mehrere mikrobizid wirksame stickstoffhaltige organische Verbindungen in einer Menge von 0,1 bis 0,5 Gew.-% Aktivsubstanz, bezogen auf das Gesamtgewicht des Desinfektionsmittels.

6. Desinfektionsmittel nach Anspruch 1, enthaltend eine oder mehrere mikrobizid wirksame phenolische Verbindungen in einer Menge von 0,05 bis 0,1 Gew.-% Aktivsubstanz, bezogen auf das Gesamtgewicht des Desinfektionsmittels.

7. Desinfektionsmittel nach Ansprüchen 1 bis 6, enthaltend

| | |
|---|---|
| - 10 bis 16 Gew.-% | eines oder mehrerer Alkohole mit 2 bis 8 C-Atomen, |
| - 0,3 bis 0,6 Gew.-% | Wasserstoffperoxid oder eine in wäßriger Phase Peroxid bildende Verbindung, |
| - 0,2 bis 0,4 Gew.-% | einer oder mehrerer Carbonsäuren, |
| - 0,05 bis 0,5 Gew.-% | einer oder mehrerer mikrobizid wirksamer stickstoffhaltiger organischer Verbindungen |
| - 0,05 bis 0,1 Gew.-% | einer oder mehrerer mikrobizid wirksamer phenolischer Verbindungen, |
| gegebenenfalls weitere, | in Desinfektionsmitteln vorhandene Wirkstoffe und/oder Hilfsstoffe und |
| - Wasser | in einer Menge, die die genannten Komponenten zu 100 Gew.-% aufsummiert. |

8. Desinfektionsmittel nach Ansprüchen 1 bis 7, enthaltend einen oder mehrere Alkohole aus der Gruppe Ethanol, n-Propanol und i-Propanol.

9. Desinfektionsmittel nach Ansprüchen 1 bis 7, enthaltend als Alkohol Benzylalkohol neben einem oder mehreren der Alkohole aus der Gruppe Ethanol, n-Propanol und i-Propanol.

10. Desinfektionsmittel nach Ansprüchen 1 bis 9, enthaltend als oxidierendes Agens $H_2O_2$ und/oder Peressigsäure.

11. Desinfektionsmittel nach Anspruch 10, enthaltend Wasserstoffperoxid als oxidierendes Agens.

12. Desinfektionsmittel nach Ansprüchen 1 bis 11, enthaltend als Carbonsäure eine oder mehrere Verbindungen aus der Gruppe Ameisensäure, Essigsäure, Propionsäure, Fumarsäure, Milchsäure, Weinsäure, 9-Undecylensäure, Sorbinsäure und Benzeosäure.

13. Desinfektionsmittel nach Anspruch 12, enthaltend als Carbonsäure Milchsäure.

14. Desinfektionsmittel nach Anspruch 1, enthaltend als mikrobizid wirksame Bis-Biguanidverbindung eine oder mehrere Verbindungen aus der Gruppe 1,2-Bis-($N^5$-p-chlorphenyl-$N^1$-biguanido)-ethan, 1,2-Bis-($N^5$-p-nitrophenyl-$N^1$-biguanido)-ethan, 1,2-Bis-($N^5$-p-hydroxyphenyl-$N^1$-biguanido)-ethan, 1,2-Bis-($N^5$-p-chlorbenzyl-$N^1$-biguanido)-ethan, 1,2-Bis-($N^5$-p-brom-phenyl-$N^5$-hexyl-$N^1$-biguanido)-ethan, 1,2-Bis-($N^5$-p-chlorphenyl-$N^5$-2-ethylphenyl-$N^1$-biguanido)-ethan, 1,2-Bis-($N^5$-p-chlorphenyl-$N^1$-ethyl-$N^1$-biguanido)-ethan, 1,2-Bis-($N^5$-p-methoxyphenyl-$N^1$-biguanido)-ethan, 1,2-Bis-($N^5$-p-methylphenyl-$N^1$-biguanido)-ethan, 1,2-Bis-($N^5$-3,5-dimethylphenyl-$N^1$-biguanido)-ethan, 1,2-Bis-($N^5$-2,6-dichlorphenyl-$N^1$-biguanido)-ethan, 1,2-Bis-($N^5$-2,6-dimethylphenyl-$N^1$-biguanido)-ethan, 1,4-Bis-($N^5$-p-chlorphenyl-$N^1$-biguanido)-butan, Bis-($N^5$-p-chlorphenyl-$N^1$-biguanido)-methan und 1,3-Bis-($N^5$-p-chlorphenyl-$N^1$-biguanido)-propan sowie deren wasserlösliche, nichttoxische Additionssalze.

15. Desinfektionsmittel nach Ansprüchen 1, enthaltend als nichttoxische Additionssalze der mikrobizid wirksamen Bis-Biguanidverbindungen deren Hydrochloride, Acetate oder Gluconate.

16. Desinfektionsmittel nach Anspruch 1, enthaltend als mikrobizid wirksame stickstoffhaltige organische Verbindung eine oder mehrere Verbindungen aus der Gruppe Oligo-Hexamethylenbiguanidhydrochlorid, 1.1'-Hexamethylen-bis-[5-(4-chlorphenyl-)biguanid], dessen Hydrochlorid, Acetat und Gluconat, Kokosalkylpropylendiaminguanidiniumdiacetat, N,N'-(1,10-decandiyldi-1-[4H]-pyridyl-4-yliden-)bis(1-octanamin-)dihydrochlorid, $N^3$-Kokosalkylguanidiniumhydrochlorid und 5-Amino-1.3-bis-(2-ethylhexyl-)-5-methyl-hexahydropyrimidin.

**17.** Desinfektionsmittel nach Anspruch 1, enthaltend als stickstoffhaltige organische Verbindung eine oder mehrere quartäre Ammoniumverbindungen in einer Menge von 0,05 bis 0,1 Gew.-%.

**18.** Desinfektionsmittel nach Anspruch 1, enthaltend als quartäre Ammoniumverbindungen N-Alkyl-N,N-dimethyl-benzylammoniumchlorid und/oder n-Decyloctyldimethylammoniumchlorid und/oder Di-n-octyldimethylammoniumchlorid und/oder Di-n-decylmethylalkoxyammoniumpropionat mit 1 bis 6 C-Atomen im Alkoxyrest und/oder Di-n-Decyldimethylammoniumchlorid.

**19.** Desinfektionsmittel nach Anspruch 6, enthaltend als phenolische Verbindung eine oder mehrere Verbindungen aus der Gruppe o-Phenylphenol, Benzylphenol, p-Chlor-n-kresol, 2.3.4.6-Tetrachlorphenol, 2.4-Dichlorphenol, Monochlorphenylphenol, o-Benzyl-p-chlorphenol, 2-Cyclopentyl-4-chlorphenol, chlorierte Xylole, Resorcin, 3-Hydroxy-p-cymol, 4-Allyl-2-methoxyphenol, 3-Isopropyl-2-methylphenol, 4-Propenylanisol und Salicylsäurephenylester sowie deren wasserlösliche Alkalimetallsalze, bevorzugt deren Natriumsalze.

**20.** Desinfektionsmittel nach Anspruch 6, enthaltend als phenolische Verbindungen eine oder mehrere Verbindungen aus der Gruppe o-Phenylpbenol, 4-Propenylanisol, 4-Allyl-2-methoxyphenol, 3-Hydroxy-p-cymol und Salicylsäurephenylester.

**21.** Desinfektionsmittel nach Ansprüchen 1 bis 20, enthaltend zusätzlich einen oder mehrere Emulgatoren im Mengenverhältnis phenolische Verbindung : Emulgator von 2 : 1 bis 1 : 2, bevorzugt von 1 : 1.

**22.** Desinfektionmittel nach Anspruch 21, enthaltend zusätzlich als Emulgator eine oder mehrere Verbindungen aus der Gruppe Decahydrat eines Additionsprodukts von 35 Mol EO an hydriertes Rizinusöl, Additionsprodukt von 30 Mol EO an nichthydriertes Rizinusöl und Laurinsäuremonoglycerinester.

**23.** Desinfektionsmittel nach Ansprüchen 1 bis 22, enthaltend zusätzlich einen oder mehrere Farbstoffe in Mengen von 0,005 bis 0,1 Gew.-%.

**24.** Desinfektionsmittel nach Anspruch 23, enthaltend als Farbstoff eine Verbindung aus der Gruppe Dinatriumsalz der 1'-Hydroxy-1.2'-azonaphthalin-4.4'-disulfonsäure, Dinatriumsalz der 6-Hydroxy-5-(4-sulfophenylazo-)2-naphthalinsulfonsäure, Tetranatriumsalz der 4-Sulfo-phenylazo-4-(7-sulfonaphthalin-)1-azo-2-(8-acetamido-1-hydroxy-3.5-naphtalin-disulfonsäure) und Extrakt aus Dactylopius coccus (Carmin E 120).

**25.** Desinfektionsmittel nach Ansprüchen 1 bis 24, enthaltend zusätzlich eine oder mehrere Acridinverbindungen in Mengen von 0,01 bis 0,2 Gew.-%.

**26.** Desinfektionsmittel nach Anspruch 25, enthaltend als Acridinverbindung eine oder mehrere Verbindungen aus der Gruppe 3.6-Diamino-acridin-sulfat, 3.6-Diamino-10-methylacridiniumchlorid, 2-Ethoxy-6.9-diamino-acridinlactat und 3.6-Diaminoacridin-monohydrochlorid.

**27.** Desinfektionsmittel nach Ansprüchen 1 bis 26, enthaltend zusätzlich einen oder mehrere Komplexbildner in Mengen von 0,01 bis 0,5 Gew.-%.

**28.** Desinfektionsmittel nach Anspruch 27, enthaltend als Komplexbildner eine oder mehrere Verbindungen aus der Gruppe Ethylendiamintetraessigsäure, Nitrilotriessigsäure und Hydroxyethandiphosphonsäure.

**29.** Desinfektionsmittel nach Ansprüchen 1 bis 28, enthaltend zusätzlich Rheologie-Einsteller in Mengen von 1,0 bis 10,0, bevorzugt von 3 bis 6 Gew.-%.

**30.** Desinfektionsmittel nach Anspruch 29, enthaltend als Rheologie-Einsteller eine oder mehrere Substanzen aus der Gruppe PVP, Methylcellulose, Hydroxyethylcellulose, Hydroxypropylcellulose und wasserlösliche Polyacrylate, bevorzugt PVP mit einem K-Wert von 80 bis 96 und einem Wassergehalts von 5 Gew.-%.

**31.** Desinfektionsmittel nach Ansprüchen 1 bis 30 , enthaltend zusätzlich ein oder mehrere Alkyl- und/oder Alkenylglycoside in Mengen von 0,1 bis 2 Gew.-%.

**32.** Desinfektionsmittel nach Anspruch 31, enthaltend Alkyl- und/oder Alkenylglykoside mit 8 bis 16 C-Atomen, vorzugsweise mit 10 bis 14 C-Atomen im Alkylrest.

**33.** Desinfektionsmittel nach Ansprüchen 1 bis 32, enthaltend ein oder mehrere Alkyl- und/oder Alkenylmonoglycoside und/oder Alkyl- und/oder Alkenylpolyglycoside mit 2 bis 8 Glycosidresten, vorzugsweise mit 2 oder 3 Glycosidresten im Molekül.

**34.** Desinfektionsmittel nach Ansprüchen 1 bis 33, enthaltend als weitere Komponenten Geruchs- und/oder Geschmacksstoffe und/oder Verdicker und/oder Treibmittel.

**35.** Desinfektionsmittel nach Ansprüchen 1 bis 34, dadurch gekennzeichnet, daß sie einen pH-Wert im Bereich von 3,5 bis 7, bevorzugt von 4 bis 6 aufweisen.

**36.** Desinfektionsmittel nach Ansprüchen 1 bis 35, enthaltend

| | |
|---|---|
| - 12 bis 15 Gew.-% | Ethanol, |
| - 0,3 bis 0,6 Gew.-% | $H_2O_3$, |
| - 0,2 bis 0,4 Gew.-% | Milchsäure, |
| - 0,05 bis 0,5 Gew.-% | Chlorhexidingluconat oder einer quartären Ammoniumverbindung |
| - 0,05 bis 0,1 Gew.-% | einer Mischung aus 91,4 % natürlichem Pfefferminzöl mit einem Gehalt von ca. 90 % Menthol, 4 % Salicylsäurephenylester, 3,5 % Anethol, 0,6 % Eugenol und 0,5 % Thymol, |
| - 0 bis 0,1 Gew.-% | o-Phenylphenol, |
| - 3 bis 6 Gew.-% | PVP und |
| - Wasser | in einer Menge, die die genannten Komponenten zu 100 Gew.-% aufsummiert. |

**Claims**

**1.** Liquid, aqueous mucous membrane disinfectants based on alcohol and hydrogen peroxide containing

a) - one or more $C_{2-8}$ alcohols in a quantity of 8 to 25% by weight of active substance,
b) - hydrogen peroxide or a compound which forms peroxide in aqueous phase in a quantity of 0.2 to 0.7% by weight of active substance,
c) - one or more carboxylic acids in a quantity of 0.1 to 0.5% by weight of active substance,
d) - one or more microbicidally active, nitrogen-containing organic compounds from the group consisting of oligohexamethyl biguanides corresponding to the general formula (I):

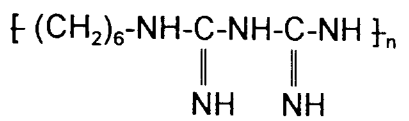

(I)

in which n is a number of at least 2 and preferably from 4 to 6, bis-quanides, water-soluble, non-toxic addition salts of these two classes of compounds, 5-amino-1,3-bis-(2-ethylenehexyl)-5-methyl hexahydropyrimidine, cocoalkyl propylenediamine guanidinium diacetate, N,N'-(1,10-decanediyl-di-1-[4H]-pyridyl-4-ylidene)-bis-(1-octaneamine)-dihydrochloride, $N^3$-cocoalkyl guanidinium hydrochloride and quaternary ammonium compounds in a quantity of 0.05 to 1% by weight of active substance,

- optionally one or more microbicidally active phenolic compounds in a quantity of 0.01 to 0.1% by weight of active substance,
- optionally other active substances and/or auxiliaries typically present in disinfectants and
- water in a quantity which makes up the components mentioned to 100% by weight
  (percentages by weight based on the total weight of the mucous membrane disinfectant).

**2.** Disinfectants as claimed in claim 1 containing one or more $C_{2-8}$ alcohols in a quantity of 10 to 20% by weight of active substance, based on the total weight of the disinfectant.

**3.** Disinfectants as claimed in claim 1 containing hydrogen peroxide or a compound which forms peroxide in aqueous phase in a quantity of 0.3 to 0.6% by weight of active substance, based on the total weight of the disinfectant.

**4.** Disinfectants as claimed in claim 1 containing one or more carboxylic acids in a quantity of 0.2 to 0.4% by weight

of active substance, based on the total weight of the disinfectant.

5. Disinfectants as claimed in claim 1 containing one or more microbicidally active, nitrogen-containing organic compounds in a quantity of 0.1 to 0.5% by weight of active substance, based on the total weight of the disinfectant.

6. Disinfectants as claimed in claim 1 containing one or more microbicidally active phenolic compounds in a quantity of 0.05 to 0.1% by weight of active substance, based on the total weight of the disinfectant.

7. Disinfectants as claimed in claims 1 to 6 containing

- 10 to 16% by weight of one or more $C_{2-8}$ alcohols,
- 0.3 to 0.6% by weight of hydrogen peroxide or a compound which forms peroxide in aqueous phase,
- 0.2 to 0.4% by weight of one or more carboxylic acids,
- 0.05 to 0.5% by weight of one or more microbicidally active nitrogen-containing organic compounds,
- 0.05 to 0.1% by weight of one or more microbicidally active phenolic compounds,
- optionally other active substances and/or auxiliaries typically present in disinfectants and
- water in a quantity which makes up the components mentioned to 100% by weight.

8. Disinfectants as claimed in claims 1 to 7 containing one or more alcohols from the group consisting of ethanol, n-propanol and i-propanol.

9. Disinfectants as claimed in claims 1 to 7 containing as alcohol benzyl alcohol in addition to one or more of the alcohols from the group consisting of ethanol, n-propanol and i-propanol.

10. Disinfectants as claimed in claims 1 to 9 containing $H_2O_2$ and/or peracetic acid as oxidizing agent.

11. Disinfectants as claimed in claim 10 containing hydrogen peroxide as oxidizing agent.

12. Disinfectants as claimed in claims 1 to 11 containing as carboxylic acid one or more compounds from the group consisting of formic acid, acetic acid, propionic acid, fumaric acid, lactic acid, tartaric acid, 9-undecylenic acid, sorbic acid and benzoic acid.

13. Disinfectants as claimed in claim 12 containing lactic acid as the carboxylic acid.

14. Disinfectants as claimed in claim 1 containing as the microbicidally active bis-biguanide compound one or more compounds from the group consisting of 1,2-bis-($N^5$-p-chlorophenyl-$N^1$-biguanido)-ethane, 1,2-bis-($N^5$-p-nitrophenyl-$N^1$-biguanido)-ethane, 1,2-bis-($N^5$-p-hydroxyphenyl-N-biguanido)-ethane, 1,2-bis-($N^5$-p-chlorobenzyl-$N^1$-biguanido)-ethane, 1,2-bis-($N^5$-p-bromophenyl-$N^5$-hexyl-$N^1$-biguanido)-ethane, 1,2-bis-($N^5$-p-chlorophenyl-$N^5$-2-ethylphenyl-$N^1$-biguanido)-ethane, 1,2-bis-($N^5$-p-chlorophenyl-$N^1$-ethyl-$N^1$-biguanido)-ethane, 1,2-bis-($N^5$-p-methoxyphenyl-$N^1$-biguanido)-ethane, 1,2-bis-($N^5$-p-methylphenyl-$N^1$-biguanido)-ethane, 1,2-bis-($N^5$-3,5-dimethylphenyl-$N^1$-biguanido)-ethane, 1,2-bis-($N^5$-2,6-dichlorophenyl-$N^1$-biguanido)-ethane, 1,2-bis-($N^5$-2,6-dimethylphenyl-$N^1$-biguanido)-ethane, 1,4-bis-($N^5$-p-chlorophenyl)-$N^1$-biguanido)-butane, bis-($N^5$-p-chlorophenyl-$N^1$-biguanido)-methane and 1,3-bis-($N^5$-p-chlorophenyl-$N^1$-biguanido)-propane and their water-soluble, non-toxic addition salts.

15. Disinfectants as claimed in claim 1 containing hydrochlorides, acetates or gluconates as the non-toxic addition salts of the microbicidally active bis-biguanide compounds.

16. Disinfectants as claimed in claim 1 containing as the microbicidally active, nitrogen-containing organic compound one or more compounds from the group consisting of oligohexamethylene biguanide hydrochloride, 1,1'-hexamethylene-bis-[5-(4-chlorophenyl)-biguanide], its hydrochloride, acetate and gluconate, cocoalkyl propylenediamine guanidinium diacetate, N,N'-(1,10-decanediyl-di-1-[4H]-pyridyl-4-ylidene)-bis-(1-octaneamine)-dihydrochloride, $N^3$-cocoalkyl guanidinium hydrochloride and 5-amino-1,3-bis-(2-ethylhexyl)-5-methyl hexahydropyrimidine.

17. Disinfectants as claimed in claim 1 containing one or more quaternary ammonium compounds in a quantity of 0.05 to 0.1% by weight as the nitrogen-containing organic compound.

18. Disinfectants as claimed in claim 1 containing N-alkyl-N,N-dimethyl benzyl ammonium chloride and/or n-decyl octyl dimethyl ammonium chloride and/or di-n-octyl dimethyl ammonium chloride and/or di-n-decyl methyl alkoxyammonium propionate containing 1 to 6 carbon atoms in the alkoxy radical and/or di-n-decyl dimethyl ammonium chloride as quaternary ammonium compounds.

**19.** Disinfectants as claimed in claim 6 containing as the phenolic compound one or more compounds from the group consisting of o-phenylphenol, benzylphenol, p-chloro-n-cresol, 2,3,4,6-tetrachlorophenol, 2,4-dichlorophenol, monochlorophenylphenol, o-benzyl-p-chlorophenol, 2-cyclopentyl-4-chlorophenol, chlorinated xylenes, resorcinol, 3-hydroxy-p-cymol, 4-allyl-2-methoxyphenol, 3-isopropyl-2-methylphenol, 4-propenyl anisole and salicylic acid phenyl ester and also water-soluble alkali metal salts, preferably sodium salts, thereof.

**20.** Disinfectants as claimed in claim 6 containing one or more compounds from the group consisting of o-phenylphenol, 4-propenyl anisole, 4-allyl-2-methoxyphenol, 3-hydroxy-p-cymol and salicylic acid phenyl ester as the phenolic compounds.

**21.** Disinfectants as claimed in claims 1 to 20 additionally containing one or more emulsifiers in a quantitative ratio of phenolic compound to emulsifier of 2:1 to 1:2, preferably 1:1.

**22.** Disinfectants as claimed in claim 21 additionally containing as emulsifier one or more compounds from the group consisting of the decahydrate of an adduct of 35 moles of EO with hydrogenated castor oil, the adduct of 30 moles of EO with non-hydrogenated castor oil and lauric acid monoglycerol ester.

**23.** Disinfectants as claimed in claims 1 to 22 additionally containing one or more dyes in quantities of 0.005 to 0.1% by weight.

**24.** Disinfectants as claimed in claim 23 containing as dye a compound from the group consisting of the disodium salt of 1'-hydroxy-1,2'-azonaphthalene-4,4'-disulfonic acid, the disodium salt of 6-hydroxy-5-(4-sulfophenylazo)-2-naphthalene sulfonic acid, the tetrasodium salt of 4-sulfophenylazo-4-(7-sulfonaphthalene-1-azo-2-(8-acetamido-1-hydroxy-3,5-naphthalene disulfonic acid) and extract of Dactylopius coccus (Carmin E 120).

**25.** Disinfectants as claimed in claims 1 to 24 additionally containing one or more acridine compounds in quantities of 0.01 to 0.2% by weight.

**26.** Disinfectants as claimed in claim 25 containing as acridine compound one or more compounds from the group consisting of 3,6-diaminoacridine sulfate, 3,6-diamino-10-methyl acridinium chloride, 2-ethoxy-6,9-diaminoacridine lactate and 3,6-diaminoacridine monohydrochloride.

**27.** Disinfectants as claimed in claims 1 to 26 additionally containing one or more complexing agents in quantities of 0.01 to 0.5% by weight.

**28.** Disinfectants as claimed in claim 27 containing as complexing agent one or more compounds from the group consisting of ethylenediamine tetraacetic acid, nitrilotriacetic acid and hydroxyethane diphosphonic acid.

**29.** Disinfectants as claimed in claims 1 to 28 additionally containing rheology regulators in quantities of 1.0 to 10.0% by weight and preferably in quantities of 3 to 6% by weight.

**30.** Disinfectants as claimed in claim 29 containing as rheology regulators one or more substances from the group consisting of PVP, methyl cellulose, hydroxyethyl cellulose, hydroxypropyl cellulose and water-soluble polyacrylates, preferably PVP having a K-value of 80 to 96 and a water content of 5% by weight.

**31.** Disinfectants as claimed in claims 1 to 30 additionally containing one or more alkyl and/or alkenyl glycosides in quantities of 0.1 to 2% by weight.

**32.** Disinfectants as claimed in claim 31 containing alkyl and/or alkenyl glycosides containing 8 to 16 carbon atoms and preferably 10 to 14 carbon atoms in the alkyl radical.

**33.** Disinfectants as claimed in claims 1 to 32 containing one or more alkyl and/or alkenyl monoglycosides and/or alkyl and/or alkenyl polyglycosides containing 2 to 8 glycoside residues and preferably 2 or 3 glycoside residues in the molecule.

**34.** Disinfectants as claimed in claims 1 to 33 containing odour and/or flavour enhancers and/or thickeners and/or propellents as further components.

**35.** Disinfectants as claimed in claims 1 to 34, characterized in that they have a pH value of 3.5 to 7 and preferably of 4 to 6.

**36.** Disinfectants as claimed in claims 1 to 35 containing

- 12 to 15% by weight of ethanol,
- 0.3 to 0.6% by weight of $H_2O_2$,
- 0.2 to 0.4% by weight of lactic acid,
- 0.05 to 0.5% by weight of chlorhexidine gluconate or a quaternary ammonium compound,
- 0.05 to 0.1% by weight of a mixture of 91.4% natural peppermint oil containing approx. 90% menthol, 4% salicylic acid phenyl ester, 3.5% anethole, 0.6% eugenol and 0.5% thymol,
- 0 to 0.1% by weight of o-phenylphenol,
- 3 to 6% by weight of PVP and
- water in a quantity which makes up the components mentioned to 100% by weight.

**Revendications**

**1.** Agent désinfectant pour les muqueuses, aqueux, liquide, à base d'alcool et de peroxyde d'hydrogène, caractérisé en ce qu'

a) il contient un ou plusieurs alcools ayant de 2 à 8 atomes de carbone en quantité allant de 8 à 25 % en poids de substance active,
b) du peroxyde d'hydrogène ou un composé qui forme en phase aqueuse du peroxyde en une quantité allant de 0,2 à 0,7 % en poids de substance active,
c) un ou plusieurs acides carboxyliques en une quantité allant de 0,1 à 0,5 % en poids de substance active,
d) un ou plusieurs composés organiques azotés à action microbicide choisis dans le groupe des oligohexaméthylbiguanides de formule générale (I),

$$[(CH_2)_6-NH-\underset{\underset{NH}{\|}}{C}-NH-\underset{\underset{NH}{\|}}{C}-NH]_n$$

dans laquelle n est un nombre d'au moins 2, de préférence de 4 à 6, des biguanides, des sels d'addition de ces deux classes de composés, solubles dans l'eau, non toxiques, 5-amino-1,3-bis-(2-éthylenhexyl-)5-méthylhexahydropyrimidine, du diacétate de cocosalkylpropylènediaminoguanidinium, du chlorhydrate de N,N'-(1,10-décandiyldi-1-[4H]-pyridyl-4-ylidène-bis-1-octanamine) et les composés d'ammonium quaternaires en une quantité allant de 0,05 à 1 % en poids de substance active,

- le cas échéant un ou plusieurs composés phénoliques à action microbicide en une quantité allant de 0,01 à 0,1 % en poids de substance active,
- le cas échéant encore d'autres principes actifs et/ou adjuvants usuels dans les agents désinfectants et de l'eau en une quantité qui complète les composants cités à 100 % en poids, les % en poids à chaque fois rapportés au poids total de l'agent désinfectant pour les muqueuses.

**2.** Agent désinfectant selon la revendication 1,
caractérisé en ce qu'
il contient un ou plusieurs alcools ayant de 2 à 8 atomes de carbone, en une quantité allant de 10 à 20 % en poids, rapporté au poids total de l'agent désinfectant.

**3.** Agent désinfectant selon la revendication 1,
caractérisé en ce qu'
il contient du peroxyde d'hydrogène ou un composé qui forme un peroxyde en phase aqueuse en une quantité allant de 0,3 à 0,6 % en poids de substance active, rapporté au poids total d'agent désinfectant.

**4.** Agent désinfectant selon la revendication 1,
caractérisé en ce qu'
il contient un ou plusieurs acides carboxyliques en une quantité allant de 0,2 à 0,4 % en poids de substance active, rapporté au poids total de l'agent désinfectant.

**5.** Agent désinfectant selon la revendication 1,
caractérisé en ce qu'
il contient un ou plusieurs composés organiques azotés, actifs comme microbicide, en une quantité allant de 0,1 à 0,5 % en poids de substance active, rapporté au poids total d'agent désinfectant.

**6.** Agent désinfectant selon la revendication 1,
caractérisé en ce qu'
il contient un ou plusieurs composés phénoliques actifs comme microbicide, en une quantité allant de 0,05 à 0,1 % en poids de substance active, rapporté au poids total d'agent désinfectant.

**7.** Agent désinfectant selon la revendication 1,
caractérisé en ce qu'
il contient :

| | |
|---|---|
| - 10 à 16 % | en poids d'un ou plusieurs alcools ayant de 2 à 8 atomes de carbone, |
| - 0,3 à 0,6 % | en poids de peroxyde d'hydrogène ou un composé qui forme du peroxyde en phase aqueuse, |
| - 0,2 à 0,4 % | en poids d'un ou plusieurs acides carboxyliques |
| - 0,05 à 0,5 % | en poids d'un ou plusieurs composés organiques azotés actifs comme microbicide, |
| - 0,05 à 0,1 % | en poids d'un ou plusieurs composés phénoliques actifs comme microbicide, |

le cas échéant d'autres principes actifs et/ou adjuvants présents dans les agents désinfectants,
et de l'eau en une quantité qui complète les composés mentionnés à 100 % en poids.

**8.** Agent désinfectant selon les revendications 1 à 7,
caractérisé en ce qu'
il renferme un ou plusieurs alcools choisis dans le groupe de l'éthanol, du n-propanol et de l'i-propanol.

**9.** Agent désinfectant selon les revendications 1 à 7,
caractérisé en ce qu'
il contient comme alcool, l'alcool benzylique à côté d'un ou plusieurs alcools choisis dans le groupe de l'éthanol, du n-propanol et du i-propanol.

**10.** Agent désinfectant selon les revendications 1 à 9,
caractérisé en ce qu'
il contient comme agent oxydant $H_2O_2$ et/ou de l'acide peracétique.

**11.** Agent désinfectant selon la revendication 10,
caractérisé en ce qu'
il contient du peroxyde d'hydrogène comme agent oxydant.

**12.** Agent désinfectant selon les revendications 1 à 11,
caractérisé en ce qu'
il contient comme acide carboxylique un ou plusieurs composés choisis dans le groupe de l'acide formique, de l'acide acétique, de l'acide propionique, de l'acide fumarique, de l'acide lactique, de l'acide tartrique, de l'acide 9-undécylénique, de l'acide sorbique et de l'acide benzoïque.

**13.** Agent désinfectant selon la revendication 12,
caractérisé en ce qu'
il contient comme acide carboxylique de l'acide lactique.

**14.** Agents désinfectants selon la revendication 1,
caractérisé en ce qu'
ils contiennent comme composé du type bis-biguanide actifs comme microbicide, un ou plusieurs composés choisis dans le groupe du 1,2-Bis-($N^5$-p-chlorophényl-$N^1$-biguanido)-ethane, le 1,2-Bis-($N^5$-p-nitrophényl-$N^1$-biguanido)-éthane, le 1,2-Bis-($N^5$-p-hydroxyphényl-$N^1$-biguanido)-éthane, le 1,2-Bis-($N^5$-p-chlorobenzyl-$N^1$-biguanido)-éthane, le 1,2-Bis-($N^5$-p-bromophényl-$N^5$-hexyl-$N^1$-biguanido)éthane, le 1,2-Bis-($N^5$-p-chlorophényl-$N^5$-2-éthyl-phényl-$N^1$-biguanido)-éthane, le 1,2-Bis-($N^5$-p-chlorophényl-$N^1$-éthyl-$N^1$-biguanido)-éthane, le 1,2-Bis-($N^5$-p-méthoxyphényl-$N^1$-biguanido)-éthane, le 1,2-Bis-($N^5$-p-méthylphényl-$N^1$-biguanido)-éthane, le 1,2-Bis-($N^5$-3,5-diméthylphényl-$N^1$-biguanido)-éthane, le 2-Bis-($N^5$-2,6-dichlorophényl-$N^1$-biguanido)-éthane, le 1,2-Bis-($N^5$-2,6-diméthylphényl-$N^1$-biguanido)-éthane, 1,4-Bis-($N^5$-p-chlorophényl-$N^1$-biguanido)-butane, le Bis-($N^5$-p-chlorophényl-$N^1$-biguanido)-méthane, et le 1,3-Bis-($N^5$-p-chlorophényl-$N^1$-biguanido)-propane, ainsi que leurs sels d'addition solubles dans l'eau, non toxiques.

**15.** Agent désinfectant selon la revendication 1,
caractérisé en ce qu'
il contient comme sels d'addition non toxiques des composés du type bis-biguanide, actifs comme microbicide, leurs chlorhydrates, acétates ou gluconates.

**16.** Agent désinfectant selon la revendication 1,
caractérisé en ce qu'
il contient comme composé organique azoté actif comme microbicide, un ou plusieurs composés choisis dans le groupe du chlorhydrate d'oligohexaméthylènebiguanide, du 1,1'-hexaméthylène-bis[5-(4-chlorophényl)biguanide], son chlorhydrate, acétate et gluconate, le diacétate de cocosalkylpropylendiaminguanidinium, le dichlorhydrate de N,N'-(1,10-décandiyldi-1-(4H)-pyridyl-4-ylidène)bis(1-octanamino), le chlorhydrate de $N^3$-cocosalkylguanidinium et la 5-amino-1.3-bis-(2-éthylhéxyl-)-5-méthyl-hexahydropyrimidine.

**17.** Agent désinfectant selon la revendication 1,
caractérisé en ce qu'
il contient comme composé organique azoté un ou plusieurs composés d'ammonium quaternaires en une quantité allant de 0,05 à 0,1 % en poids.

**18.** Agent désinfectant selon la revendication 1,
caractérisé en ce qu'
il contient comme composés d'ammonium quaternaires le chlorure de N-alkyl-N,N-diméthyl-benzylammonium, et/ou le chlorure de n-Decyloctyldiméthylammonium et/ou le chlorure de Di-n-octyldiméthylammonium et/ou le propionate de Di-n-décylméthylalkoxyammonium avec de 1 à 6 atomes de carbone dans le radical alkoxy et le chlorure de Di-n-Decyldimethylammonium.

**19.** Agent désinfectant selon la revendication 6,
caractérisé en ce qu'
il contient comme composé phénolique un ou plusieurs composés choisis dans le groupe de l'o-phénylphénol, du benzylphénol, p-chloro-n-crésol, 2.3.4.6-tétrachlorophénol, 2.4-dichlorophénol, monochlorophénylphénol, o-benzyl-p-chlorophénol, 2-cyclopentyl-4-chlorophénol, des xylols chlorés, du resorcinol, du 3-hydroxy-p-cymol, du 4-allyl-2-méthoxyphénol, du 3-isopropyl-2-méthylphénol, du 4-propényl-anisole, et de l'ester phénylique d'acide salicylique, ainsi que leurs sels de métal alcalin solubles dans l'eau, de préférence leurs sels de sodium.

**20.** Agent désinfectant selon la revendication 6,
caractérisé en ce qu'
il contient comme composés phénoliques, un ou plusieurs composés choisis dans le groupe de l'o-phénylphénol, du 4-propenylanisole, du 4-allyl-2-méthoxyphénol, du 3-hydroxy-p-cymol et de l'ester phénylique d'acide salicylique.

**21.** Agent désinfectant selon les revendications 1 à 20,
caractérisé en ce qu'
il contient en supplément un ou plusieurs agents émulsionnants, dans un rapport de quantités composé phénolique/agent émulsionnant de 2 : 1 à 1 : 2 de préférence de 1 : 1.

**22.** Agent désinfectant selon la revendication 21,
caractérisé en ce qu'
il contient en supplément comme agent émulsionnant un ou plusieurs composés choisis dans le groupe du décahydrate d'un produit d'addition de 35 mol d'OE sur une huile de ricin hydrogénée, un produit d'addition de 30 mol

d'OE sur une huile de ricin non hydrogénée et l'ester monoglycérique d'acide laurique.

**23.** Agent désinfectant selon les revendications 1 à 22,
caractérisé en ce qu'
il contient en supplément un ou plusieurs colorants en quantités allant de 0,005 à 0,1 % en poids.

**24.** Agent désinfectant selon la revendication 23,
caractérisé en ce qu'
il contient comme colorant un composé choisi dans le groupe du sel disodique de l'acide 1'-hydroxy-1,2'-azonaphtalène-4,4'-disulfonique, le sel disodique de l'acide 6-hydroxy-5-(4-sulfophénylazo)-2-naphtalène sulfonique, le sel tétrasodique de l'acide 4-sulfophénylazo-4-(7-sulfonaphtalène)1-azo-2-(8-acétamido-1-hydroxy-3,5-naphtalène disulfonique) et l'extrait de Dactylopius coccus (Carmin E 120).

**25.** Agent désinfectant selon les revendications 1 à 24,
caractérisé en ce qu'
il contient en supplément un ou plusieurs composés acridiniques en quantités allant de 0,01 à 0,2 % en poids.

**26.** Agent désinfectant selon la revendication 25,
caractérisé en ce qu'
il contient comme composé acridinique, un ou plusieurs composés choisis dans le groupe du sulfate de 3,6-diaminoacridine, du chlorure de 3,6-diamino-10-méthylacridinium, du lactate de 2-éthoxy, 6,9-diaminoacridine, et du monochlorhydrate de 3,6-diaminoacridine.

**27.** Agent désinfectant selon les revendications 1 à 26,
caractérisé en ce qu'
il contient en supplément un ou plusieurs agents complexants en quantités allant de 0,01 à 0,5 % en poids.

**28.** Agent désinfectant selon la revendication 27,
caractérisé en ce qu'
il contient comme agent complexant un ou plusieurs composés choisis dans le groupe de l'acide éthylènediaminotétraacétique, de l'acide nitriloacétique, et l'acide éthane diphosphonique.

**29.** Agent désinfectant selon les revendications 1 à 28,
caractérisé en ce qu'
il contient en supplément un régulateur de rhéologie en quantités allant de 1,0 à 10,0 de préférence de 3 à 6 % en poids.

**30.** Agent désinfectant selon la revendication 29,
caractérisé en ce qu'
il contient comme régulateur de rhéologie une ou plusieurs substances choisies dans le groupe de la PVP, de la méthylcellulose, de l'hydroxyéthylcellulose, de l'hydroxypropylcellulose et des polyacrylates solubles dans l'eau, de préférence la PVP ayant une valeur de K allant de 80 à 96 et une teneur en eau de 5 % en poids.

**31.** Agent désinfectant selon les revendications 1 à 30,
caractérisé en ce qu'
il contient en supplément un ou plusieurs alkyl- et/ou alkénylglucosides en quantités allant de 0,1 à 2 % en poids.

**32.** Agent désinfectant selon la revendication 31,
caractérisé en ce qu'
il contient des alkyl- et/ou alkénylglycosides ayant de 8 à 16 atomes de carbone, de préférence ayant de 10 à 14 atomes de carbone, dans le reste alkyle.

**33.** Agent désinfectant selon les revendications 1 à 32,
caractérisé en ce qu'
il contient un ou plusieurs alkyl- et/ou alkénylmonoglycosides et/ou alkyl- et/ou alkénylpolyglycosides ayant de 2 à 8 radicaux glycosidiques, de préférence avec 2 ou 3 radicaux glycosidiques dans la molécule.

**34.** Agent désinfectant selon les revendications 1 à 33,

caractérisé en ce qu'
il contient comme composant supplémentaires des substances odorantes et/ou aromatiques et/ou un agent épaississant et/ou un agent propulseur.

**35.** Agents désinfectants selon les revendications 1 à 34,
caractérisé en ce qu'
ils possèdent une valeur de pH dans la zone de 3,5 à 7, de préférence de 4 à 6.

**36.** Agent désinfectant selon les revendications 12 à 35,
caractérisé en ce qu'
il contient

- de 12 à 15 % en poids d'éthanol
- de 0,3 à 0,6 % en poids de $E_2O_3$,
- de 0,2 à 0,4 % en poidsd'acide lactique,
- de 0,2 à 0,5 % en poids de gluconate de chlorhexidine ou d'un composé d'ammonium quaternaire,
- de 0,05 à 0,1 % en poids d'un mélange à base de 91,4 % d'essence de menthe poivrée ayant une teneur d'environ 90 % de menthol, 4 % d'ester de phényle d'acide salicylique ; 3,5 % d'anéthol ; 0,6 % d'eugénol et 0,5 % de thymol,
- de 0 à 0,1 % en poids d'o-phénylphénol,
- de 3 à 6 % en poids de PVP,
- de l'eau en une quantité qui complète à 100 % en poids les composés mentionnés.